(19) Europäisches Patentamt
European Patent Office
Office européen des brevets

(11) EP 4 112 575 A1

(12) # EUROPÄISCHE PATENTANMELDUNG

(43) Veröffentlichungstag:
**04.01.2023 Patentblatt 2023/01**

(21) Anmeldenummer: **21401028.2**

(22) Anmeldetag: **29.06.2021**

(51) Internationale Patentklassifikation (IPC):
***C03C 3/097** (2006.01)* ***C03C 4/02** (2006.01)*
***C03C 10/00** (2006.01)*

(52) Gemeinsame Patentklassifikation (CPC):
**C03C 3/097; C03C 4/02; C03C 10/0027**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **SCHOTT AG**
**55122 Mainz (DE)**

(72) Erfinder:
- **WEISS, Evelin**
  **55131 Mainz (DE)**
- **SCHOENBERGER, Klaus**
  **55127 Mainz (DE)**
- **STINNER, Johannes**
  **55131 Mainz (DE)**
- **BOCKMEYER, Dr. Matthias**
  **55124 Mainz (DE)**
- **LANGER, Philipp**
  **67577 Alsheim (DE)**
- **BEST, Reiner**
  **55234 Albig (DE)**

(74) Vertreter: **Schott Corporate IP**
**Hattenbergstraße 10**
**55122 Mainz (DE)**

(54) **ERZEUGNIS, UMFASSEND EINE TRANSPARENTE, VOLUMENGEFÄRBTE GLASKERAMIK**

(57) Die Erfindung betrifft ein Erzeugnis, umfassend eine transparente, volumengefärbte Glaskeramik, wobei die Glaskeramik 58 - 72 Gew.-% $SiO_2$, 16 - 26 Gew.-% $Al_2O_3$, 1,0 - 5,5 Gew.-% $Li_2O$, 2,0 - <4,0 Gew.-% $TiO_2$, 0 - <2,0 Gew.-% ZnO und 0,005 - 0,12 Gew.-% $MoO_3$ auf Oxidbasis enthält und
wobei die Glaskeramik bezogen auf eine Dicke von 4 mm einen Lichttransmissionsgrad $T_{vis}$ von 0,5 - 3,5 % aufweist und wobei die Glaskeramik die Eigenschaft aufweist, dass Licht der Normlichtart D65 nach Durchtritt durch die Glaskeramik bezogen auf eine Dicke von 4 mm einen Farbort im Weißbereich A1 aufweist, der im Chromatizitätsdiagramm CIExyY-2° durch folgende Koordinaten bestimmt ist:

| A1 | |
|---|---|
| 0,3 | 0,27 |
| 0,28 | 0,315 |
| 0,35 | 0,38 |
| 0,342 | 0,31 |
| 0,3 | 0,27 |

Figur 1

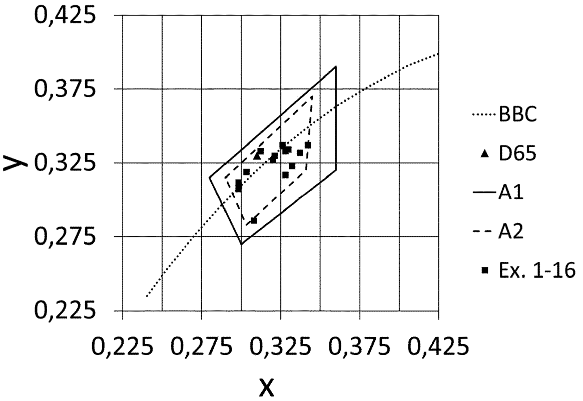


EP 4 112 575 A1

## Beschreibung

Die Erfindung betrifft ein Erzeugnis mit einer transparenten, volumengefärbten Glaskeramik sowie dessen Verwendung.

Erzeugnisse mit einer transparenten, volumengefärbten Glaskeramik kommen beispielsweise in Einrichtungs- und Ausstattungsgegenständen für Küchen und Labore in vielfältiger Weise zum Einsatz. So werden Scheiben aus Glaskeramik beispielsweise als Sichtfenster in Türen von Backöfen, als Abdeckplatte von Bedienelementen von Kochgeräten oder als Arbeitsplatte eines Küchenschranks oder Labormöbels, sowohl im privaten als auch im professionellen Umfeld verwendet. Häufig weisen solche Gegenstände zusätzlich Beleuchtungssysteme aus mehreren Leuchtelementen auf, die beispielsweise zur Darstellung eines Betriebszustandes oder zur dekorativen Beleuchtung vorgesehen sind, indem sie durch die Scheibe aus Glaskeramik hindurch leuchten.

Insbesondere für Beleuchtungssysteme, die Teil einer Benutzerschnittstelle eines solchen Gegenstandes sind, werden die technischen Anforderungen immer komplexer. Im Zentrum steht dabei stets, die Bedienung des Gegenstandes für den Benutzer zu erleichtern und die Betriebssicherheit zu erhöhen. Gleichzeitig sollen die dafür zum Einsatz kommenden Scheiben aus Glaskeramik eine größtmögliche Flexibilität aufweisen, so dass sie mit möglichst jeder denkbaren Art von Beleuchtungssystem kombinierbar sind.

Beispiele für solche komplexen Anforderungen an Beleuchtungssysteme für Benutzerschnittstellen sind die Verwendung mehrerer Lichtfarben zur Darstellung unterschiedlicher Funktionen, wobei alle Farben mit hoher Helligkeit darstellbar sein müssen. Hierfür werden vor allem blaues, rotes und weißes Licht bevorzugt.

Ein weiteres Beispiel ist die Einstellung der Beleuchtung bei unterschiedlichen Helligkeiten, um beispielsweise für die Interaktion mit dem Nutzer aktivierte Teile der Benutzerschnittstelle gegenüber nicht aktivierten Teilen hervorzuheben. In einem solchen Fall können beispielsweise aktivierte Teile heller dargestellt werden, als nicht aktivierte Teile.

Gleichzeitig müssen die Erzeugnisse aus Glaskeramik die übrigen Anforderungen an die jeweilige Verwendung erfüllen, beispielsweise thermische, chemische und mechanische Beständigkeit oder Blickdichtheit zur Verhinderung des Einblicks in das Innere eines Gegenstandes.

Aus dem Stand der Technik sind beispielsweise transparente volumengefärbte Glaskeramiken als Abdeckplatte für Kochgeräte bekannt. Volumengefärbte Glaskeramikplatten für Kochgeräte enthalten in der Regel Vanadium-Ionen zur Farbgebung, da diese die besondere Eigenschaft besitzen, im Bereich des sichtbaren Lichts zu absorbieren und im Bereich der Infrarotstrahlung eine hohe Transmission aufzuweisen. Eine solche Färbung mittels $V_2O_5$ ist beispielsweise aus der DE 10 2008 050 263 A1 bekannt.

Der Anstieg der Transmission mittels Vanadium volumengefärbter Glaskeramiken beginnt bereits im roten Teil des sichtbaren Spektralbereichs und nicht erst im Nahinfraroten. Deshalb weisen sie für rotes Licht eine um ein Vielfaches höhere Transmission auf, als beispielsweise für blaues Licht.

Im Markt sind mehrere Varianten transparenter volumengefärbter Glaskeramiken für Kochgeräte erhältlich, die gemäß ihren optischen Eigenschaften in zwei Kategorien eingeteilt werden können.

Die dunkleren Glaskeramikplatten weisen bei einer Dicke von 4 mm einen Lichttransmissionsgrad von ca. 0,5 - 3,5 % auf. Diese verhindern aufgrund des niedrigen Lichttransmissionsgrades effektiv den Einblick in das Kochfeld.

Die helleren Glaskeramikplatten weisen bei einer Dicke von 4 mm einen Lichttransmissionsgrad von ca. 3,5 - 6 % auf. Aufgrund des höheren Lichttransmissionsgrades müssen solche Glaskeramikplatten in der Regel mit opaken Schichten auf der Unterseite versehen werden, um den Einblick in das Kochfeld zu verhindern. Aufgrund der insgesamt höheren Transmission sind sie prinzipiell für die Verwendung mit roten und blauen Beleuchtungssystemen geeignet. Sie sind aber nicht ohne weiteres mit den Beleuchtungssystemen für die dunkleren Glaskeramikplatten kompatibel, da diese zu hell erscheinen würden und schlimmstenfalls durch eine Blendwirkung die Bediensicherheit reduzieren könnten.

Aus dem Stand der Technik ist weiterhin bekannt, dass solche Glaskeramikplatten mit Farbkompensationsfiltern kombiniert werden können, um auch die Verwendung weißer Beleuchtungssysteme zu ermöglichen. Solche optischen Filter sind aber in der Regel nur begrenzt temperaturstabil und verhältnismäßig kostenintensiv.

Aus der DE 20 2018 102 537 U1 sind Einrichtungs- und Ausstattungsgegenstände mit transparenten volumengefärbten Glaskeramiksubstraten bekannt. Die Glaskeramiken enthalten als Hauptfärbemittel $MoO_3$ und weisen einen Lichttransmissionsgrad zwischen 0,1 % und 12 % auf. Der Farbort der Glaskeramiken erstreckt sich im CIEyxY-Farbraum entlang der Schwarzkörperkurve innerhalb eines Weißbereichs W1.

Es ist Aufgabe der vorliegenden Erfindung, ein Erzeugnis umfassend eine volumengefärbte, transparente Glaskeramik bereitzustellen, wobei der Farbort der Glaskeramik besonders farbneutral ist. Gleichzeitig soll die Wirtschaftlichkeit gegenüber den aus dem Stand der Technik bekannten Glaskeramiken verbessert werden.

Die Aufgabe wird gelöst durch den Gegenstand der unabhängigen Ansprüche. Spezielle und bevorzugte Ausführungsformen sind in den abhängigen Ansprüchen angegeben.

Die Erfindung betrifft somit ein Erzeugnis, umfassend eine transparente, volumengefärbte Glaskeramik, wobei die Glaskeramik 58 - 72 Gew.-% $SiO_2$, 16 - 26 Gew.-% $Al_2O_3$, 1,0 - 5,5 Gew.-% $Li_2O$, 2,0 - <4,0 Gew.-% $TiO_2$, 0 - <2,0 Gew.-% ZnO und 0,005 - 0,12 Gew.-% $MoO_3$ auf Oxidbasis enthält und wobei die Glaskeramik bezogen auf eine Dicke

von 4 mm einen Lichttransmissionsgrad $\tau_{vis}$ von 0,5 - 3,5 % aufweist und wobei die Glaskeramik die Eigenschaft aufweist, dass Licht der Normlichtart D65 nach Durchtritt durch die Glaskeramik bezogen auf eine Dicke von 4 mm einen Farbort im Weißbereich A1 aufweist, der im Chromatizitätsdiagramm CIExyY-2° durch folgende Koordinaten bestimmt ist:

| A1 | |
|---|---|
| 0,3 | 0,27 |
| 0,28 | 0,315 |
| 0,35 | 0,38 |
| 0,342 | 0,31 |
| 0,3 | 0,27 |

Bei einem solchen Erzeugnis kann es sich beispielsweise um einen Einrichtungs- oder Ausstattungsgegenstand für eine Küche oder ein Labor handeln. Darunter ist im Sinne der vorliegenden Erfindung allgemein ein Gegenstand zu verstehen, der zur Einrichtung oder Ausstattung einer Küche oder eines Labors geeignet ist. Insbesondere sind dies Küchen- oder Labormöbel oder Küchen- oder Laborgeräte, die vorzugsweise elektrisch betrieben werden, unabhängig von deren konkreter Bauform. Zu Küchen- oder Labormöbeln zählen dabei insbesondere Schränke und Tische, die auf Ihrer Oberseite eine Arbeitsplatte aufweisen. Küchengeräte wie Kochgeräte, Kühlschränke, Mikrowellengeräte, Grills, Backöfen, Dampfgarer, Toaster oder Abzugshauben können dabei sowohl für den privaten als auch für den professionellen Bereich ausgelegt sein. Ebenso kann der Gegenstand ein separat angeordnetes Bedienfeld sein, über das ein Benutzer ein oder mehrere damit ansteuerbare Geräte bedienen kann. Erfindungsgemäße Geräte können beispielsweise in Küchen- oder Labormöbel integrierbar sein oder frei im Raum stehen. Zu den Laborgeräten zählen unter anderem auch Öfen, Klimaschränke, Kühlschränke oder Heizplatten.

Ebenso kann es sich bei dem Erzeugnis um einen Kamin, insbesondere eine Kaminsichtscheibe, eine Innenverkleidung für einen Kamin, einen Heizstrahler, insbesondere eine Abdeckung für einen Infrarotheizstrahler, ein mobiles elektronisches Gerät wie ein Mobiltelefon oder einen Tablet-Computer oder ein Automobil, insbesondere eine Bedien- oder Anzeigetafel in einem Automobil, oder um eine Brandschutzverglasung handeln.

Ein weiteres Beispiel für ein erfindungsgemäßes Erzeugnis ist ein Kochfeld mit einer Kochplatte aus Glaskeramik, in dem außer einer Anzeigeeinrichtung beispielsweise Heizelemente, insbesondere Induktionsheizelemente, vorhanden sind. Ebenso stellen Sichtfenster in Backofen- oder Mikrowellentüren erfindungsgemäße Erzeugnisse dar. In Küchen- oder Labormöbeln können solche Erzeugnisse zumindest einen Teil des Korpus des Möbels oder der Front, einer Tür oder einer Schublade darstellen. Besonders bevorzugt stellt ein Erzeugnis als Abdeckplatte einen Teil oder sogar die gesamte Arbeitsplatte eines Küchen- oder Labormöbels dar.

Ein erfindungsgemäßes Erzeugnis umfasst eine transparente, volumengefärbte Glaskeramik. Unter einer transparenten Glaskeramik ist dabei eine Glaskeramik mit einer niedrigen Streuung für sichtbares Licht zu verstehen. Unter einer volumengefärbten Glaskeramik ist im Sinne der vorliegenden Erfindung eine Glaskeramik zu verstehen, die einen Lichttransmissionsgrad von weniger als 80 % aufweist und als färbende Bestandteile einzelne oder mehrere Oxide der Übergangsmetalle der Gruppen 5 bis 11 des Periodensystems der Elemente enthält. Dazu zählen insbesondere $V_2O_5$, $Cr_2O_3$, $Fe_2O_3$, CoO, NiO, CuO und $MoO_3$. Auch einige andere chemische Elemente können eine Färbung der Glaskeramik bewirken, beispielsweise Oxide von Lanthanoiden, insbesondere $Nd_2O_3$. Durch diese färbenden Bestandteile absorbiert die Glaskeramik Licht. Aufgrund dieser Absorption ist der Lichttransmissionsgrad niedriger als 80 %. Die Bestandteile sind aufgrund des Herstellungsprozesses von Glaskeramiken im Wesentlichen homogen in der Glaskeramik verteilt. Deshalb führen die färbenden Bestandteile zu einer homogenen Färbung im Volumen der Glaskeramik.

Damit unterscheiden sich die transparenten, volumengefärbten Glaskeramiken von den opaken Glaskeramiken, die aufgrund von starker Streuung von sichtbarem Licht eine reduzierte Lichttransmission aufweisen. Die Lichtstreuung opaker Glaskeramiken wird durch die Anzahl, Größe und den Brechungsindex der Kristalle innerhalb der Glaskeramik verursacht. Somit ist sie eine Folge der Mikrostruktur der Glaskeramik.

Weiterhin unterscheiden sich die transparenten, volumengefärbten Glaskeramiken von den transparenten, nicht gefärbten Glaskeramiken darin, dass sie einen niedrigeren Lichttransmissionsgrad haben. Nicht gefärbte Glaskeramiken weisen einen Lichttransmissionsgrad von mehr als 80 % auf. Sie enthalten färbende Bestandteile entweder nur als unvermeidliche Verunreinigung aufgrund der für die Herstellung verwendeten Rohstoffe oder nur in sehr geringen Mengen zur Feinjustierung der optischen Eigenschaften der transparenten, nicht gefärbten Glaskeramik.

Die Glaskeramik des erfindungsgemäßen Erzeugnisses enthält 58 - 72 Gew.-% $SiO_2$, 16 - 26 Gew.-% $Al_2O_3$ und 1,0 - 5,5 Gew.-% $Li_2O$. Diese drei Komponenten sind in diesen Mengen zwingend notwendig, damit sich die für eine LithiumAluminiumsilikat-Glaskeramik typische Mikrostruktur mit der damit verbundenen niedrigen thermischen Ausdehnung einstellen kann.

Vorzugsweise enthält die Glaskeramik des erfindungsgemäßen Erzeugnisses 60 - 70 Gew.-% $SiO_2$, 18-24 Gew.-% $Al_2O_3$ und 2,5 - 5 Gew.-% $Li_2O$. Besonders bevorzugt enthält die Glaskeramik des erfindungsgemäßen Erzeugnisses 62 - 68 Gew.-% $SiO_2$, 19-23 Gew.-% $Al_2O_3$ und 3 - 4,5 Gew.-% $Li_2O$. In diesen bevorzugten Grenzen lässt sich die typische Mikrostruktur und damit die niedrige thermische Ausdehnung besonders einfach und in der industriellen Produktion besonders stabil einstellen.

Insbesondere der $Li_2O$-Anteil hat einen starken Einfluss auf die thermische Ausdehnung der Glaskeramik, da $Li_2O$ einer der wesentlichen Bestandteile der kristallinen Phase der Glaskeramik ist. Je weniger $Li_2O$ enthalten ist, desto geringer ist der Volumenanteil an kristalliner Phase in der Glaskeramik. Daraus resultiert eine höhere thermische Ausdehnung. Gleichzeitig ist Lithium ein strategisch kritischer Rohstoff für die Herstellung der Glaskeramik. Die hohe Nachfrage nach Lithium für die Batteriefertigung beeinflusst die Menge an verfügbarem Lithium und dessen Preis stark. Für Erzeugnisse, die weniger strenge Anforderungen an die thermische Wechselbeständigkeit erfüllen müssen, ist es deshalb vorteilhaft, Glaskeramiken mit einem möglichst niedrigen $Li_2O$-Anteil zu verwenden, insbesondere im Bereich 1,2 - 3 %, vorzugsweise 1,3 % - 2,5 % oder sogar 1,5 - 2 % $Li_2O$.

Darüber hinaus weist die Glaskeramik des Erfindungsgemäßen Erzeugnisses 2,0 - <4,0 Gew.-% $TiO_2$, 0 - <2,0 Gew.-% ZnO und 0,005 - 0,12 Gew.-% $MoO_3$ auf.

$TiO_2$ hat einen starken Einfluss auf die Keimbildung während der Keramisierung. Somit spielt es eine wichtige Rolle während der Herstellung der Glaskeramik. Da auch die Farbwirkung des Molybdänoxids in den erfindungsgemäßen Mengen unterstützt wird, d.h. die Zugabe von $TiO_2$ bei Anwesenheit von $MoO_3$ zu niedrigeren Werten der Lichttransmission führt, ist erfindungsgemäß ein Mindestgehalt von 2,0 Gew.-% in der Glaskeramik erforderlich. Bevorzugt ist ein Mindestgehalt von 2,5 Gew.-%, besonders bevorzugt von 2,8 Gew.-% oder sogar von 3,0 Gew.-%. Das $TiO_2$ wirkt sich jedoch negativ auf die Entglasungsstabilität aus. Deshalb beträgt die Menge an $TiO_2$ weniger als 4,0 Gew.-%. Um die Entglasungsstabilität weiter zu verbessern, beträgt die Menge an $TiO_2$ vorzugsweise maximal 3,9 Gew.-% oder sogar maximal 3,8 Gew-%. In einer bevorzugten Ausführungsform enthält die Glaskeramik deshalb neben den anderen Bestandteilen $TiO_2$ in Mengen von 2,5 - <4,0 Gew.-%, vorzugsweise 2,8 - 3,9 Gew.-%, besonders bevorzugt 3,0 - 3,8 Gew.- %.

Es hat sich überraschenderweise gezeigt, dass ZnO bei der Herstellung $MoO_3$-haltiger Glaskeramiken in kontinuierlichen, kommerziellen Schmelzaggregaten einen besonders starken Einfluss sowohl auf die resultierende Mikrostruktur als auch auf die Färbung der Glaskeramik hat.

Der ZnO-Gehalt der Glaskeramik ist deshalb erfindungsgemäß strikt auf weniger als 2 Gew.-%, bevorzugt höchstens 1,9 Gew.-%, besonders bevorzugt höchstens 1,8 Gew.-% begrenzt. In geringen Mengen unterstützt ZnO jedoch die Ausbildung einer für die Erfindung besonders vorteilhaften Mikrostruktur der Glaskeramik. Deshalb ist vorzugsweise wenigstens 0,1 Gew.-%, besonders bevorzugt wenigstens 0,5 Gew.-%, insbesondere wenigstens 1,0 Gew.-% oder sogar wenigstens 1,2 Gew.-% ZnO in der Glaskeramik enthalten.

Das erfindungsgemäße Erzeugnis ist ferner dadurch gekennzeichnet, dass die Glaskeramik in Kombination mit den zuvor genannten Komponenten $MoO_3$ in Mengen von 0,005 bis 0,12 Gew.-% enthält. In einer Weiterbildung der Erfindung enthält die Glaskeramik 0,015 - 0,100 Gew.-%, vorzugsweise 0,020 - 0,080 Gew.-% besonders bevorzugt 0,030 - 0,070 Gew.-%. Da in der Glaskeramik verschiedene Wertigkeiten des Mo-Atoms vertreten sein können, sind die angegebene Gehalte der Zusammensetzung analytisch auf die Verbindung $MoO_3$ bezogen.

Ein Mindestgehalt von 0,005 Gew.-% $MoO_3$ führt in Kombination mit den anderen Komponenten in den jeweiligen Mengen dazu, dass die benötigte Farbwirkung und Transmission erhalten wird. Wenn eine niedrige Lichttransmission eingestellt werden soll, sind höhere $MoO_3$-Gehalte von bis zu 0,12 Gew.-% erforderlich. Ebenso sind bei Zugabe von $Fe_2O_3$ oder $V_2O_5$ tendenziell höhere $MoO_3$-Gehalte von bis zu 0,12 Gew.-% erforderlich, da sowohl $Fe_2O_3$ als auch $V_2O_5$ die Transmissionscharakteristik der Glaskeramik so verändern, dass der Farbort von Licht der Normlichtart D65 nach Durchtritt durch die Glaskeramik von der Schwarzkörperkurve weg verschoben wird, insbesondere zu roten Farbtönen hin. Dies kann durch die Zugabe von $MoO_3$ zumindest teilweise kompensiert werden.

Bei Mengen von bis zu 0,12 Gew.-% und weniger wirkt das $MoO_3$, insbesondere die reduzierten Molybdänoxid-Spezies, im Wesentlichen nicht als Keimbildner und haben deshalb keinen nennenswerten Einfluss auf die Entglasungsstabilität.

Bevorzugt sind zur Einstellung der Farbwirkung mindestens 0,015 Gew.-%, weiter bevorzugt mindestens 0,020 Gew.-% und besonders bevorzugt mindestens 0,030 Gew.-% $MoO_3$ enthalten. Als Obergrenze beträgt der $MoO_3$-Gehalt bevorzugt 0,100 Gew.-%, weiter bevorzugt 0,080 Gew.-%, besonders bevorzugt 0,070 Gew.-%.

Insbesondere kann ein besonders genau eingestellter Lichttransmissionsgrad unter Verwendung von besonders wenig $MoO_3$ erzielt werden, wenn das Verhältnis von $MoO_3$ zu $TiO_2$, also $MoO_3/TiO_2$ zwischen 0,002 und 0,050, vorzugsweise zwischen 0,004 und 0,040, besonders bevorzugt zwischen 0,008 und 0,030 liegt.

Weiterhin weist die Glaskeramik des erfindungsgemäßen Erzeugnisses bezogen auf eine Dicke von 4 mm einen Lichttransmissionsgrad $\tau_{vis}$ von 0,5 - 3,5 %, vorzugsweise 0,8 - 3,2 %, besonders bevorzugt 1,0 - 3,0 %, insbesondere 1,2 - 2,8 % auf.

Unter dem Lichttransmissionsgrad $\tau_{vis}$ wird der Lichttransmissionsgrad gemessen im sichtbaren Spektralbereich von 380 bis 780 nm nach DIN EN 410 verstanden. Der Wert ist ein Maß für das Helligkeitsempfinden des menschlichen Auges. Der Wert ist identisch mit der Helligkeit Y im CIExyY-Farbraum gemessen in Transmission.

"Bezogen auf eine Dicke von 4 mm" bedeutet dabei, dass der Wert vorzugsweise bei einer Dicke der Glaskeramik von 4 mm gemessen wird. Falls die Glaskeramik eine von 4 mm abweichende Dicke aufweist, wird das Transmissionsspektrum der Glaskeramik mit der vorliegenden Dicke gemessen und mittels des Lambert-Beer'schen Gesetzes auf eine Dicke von 4 mm umgerechnet. Dann wird der Lichttransmissionsgrad mit diesem auf 4 mm umgerechnet Spektrum nach DIN EN 410 bestimmt.

Die Glaskeramik des Erzeugnisses ist transparent. Sie weist also eine vernachlässigbare Streuung für sichtbares Licht auf. Deshalb ist es für das Messergebnis unerheblich, ob für die Messung der Transmission eine Ulbrichtkugel eingesetzt wird, oder nur unter einem Beobachtungswinkel von 2° gemessen wird. Der diffus transmittierte Anteil ist gegenüber dem direkt transmittierten Anteil vernachlässigbar klein. Die Messwerte für den Lichttransmissionsgrad des Grundkörpers gemessen mit und ohne Ulbrichtkugel unterscheiden sich also höchstens um 10 %, vorzugsweise um höchstens 1 % oder sogar um weniger als 0,5 % bezogen auf den Messwert mit Ulbrichtkugel.

Eine Glaskeramik mit einen Lichttransmissionsgrad $\tau_{vis}$ von 0,5 - 3,5 % bezogen auf eine Dicke von 4 mm ist je nach ihrer tatsächlichen Dicke bei normalem Umgebungslicht stärker oder schwächer blickdicht. Zu normalem Umgebungslicht zählen beispielsweise Tageslicht oder eine Beleuchtung mit ähnlicher Helligkeit wie Tageslicht. Gleichzeitig ist die Glaskeramik aber ausreichend hell, um Leuchtanzeigen durch die Glaskeramik hindurch mit angemessener Helligkeit wahrnehmen zu können.

Dies ermöglicht es in besonders vorteilhafter Weise, Erzeugnisse mit einer Benutzerschnittstelle bereitzustellen, die wenigstens eine Leuchtanzeige aufweist. Eine solche Leuchtanzeige ist dann durch die Glaskeramik hindurch sichtbar, wenn sie eingeschaltet ist, aber unsichtbar, wenn sie nicht im Betrieb ist. Dies ist beispielsweise für Kochflächen besonders vorteilhaft, bei denen Anzeigen nur dann sichtbar sein sollen, wenn das Kochgerät, bzw. die jeweilige Anzeige in Betrieb ist. Dies erhöht die Bediensicherheit und somit die Betriebssicherheit des Kochgerätes, da Fehleinstellungen des Kochgeräts reduziert werden können.

Die Glaskeramik hat beispielsweise für Kochflächen üblicherweise eine Dicke zwischen 3 und 7 mm. In der Regel beträgt die Dicke für Kochflächen ungefähr 4 mm oder ungefähr 6 mm.

Die Glaskeramik des erfindungsgemäßen Erzeugnisses weist die Eigenschaft auf, dass Licht der Normlichtart D65 nach Durchtritt durch die Glaskeramik bezogen auf eine Dicke von 4 mm einen Farbort im Weißbereich A1 aufweist, der im Chromatizitätsdiagramm CIExyY-2° durch folgende Koordinaten bestimmt ist:

| A1 | |
|---|---|
| x | y |
| 0,3 | 0,27 |
| 0,28 | 0,315 |
| 0,35 | 0,38 |
| 0,342 | 0,31 |
| 0,3 | 0,27 |

Licht der Normlichtart D65 hat per Definition eine Farbtemperatur von ca. 6.500 K und bei direkter Betrachtung mit einem 2° Beobachter einen Farbort von x = 0,3127 und y = 0,3290.

Eine Glaskeramik, die die Eigenschaft aufweist, dass Licht der Normlichtart D65 nach Durchtritt durch diese Glaskeramik einen Farbort von x = 0,3127 und y = 0,3290 aufweist, ist perfekt farbneutral. Sie verändert die Farbe von durch sie hindurchtretendem Licht nicht. Die Farbverschiebung

$$C^* = \sqrt{(x_1 - x_2)^2 + (y_1 - y_2)^2}$$

ist in diesem Fall C*=0. Dabei sind $x_1$ und $y_1$ die Farbkoordinaten des Lichtes bei direkter Betrachtung der Lichtquelle (ohne Glaskeramik) und $x_2$ und $y_2$ sind die Farbkoordinaten des Lichtes bei Betrachtung der Lichtquelle durch die Glaskeramik hindurch.

Sofern der Begriff Licht nicht anderweitig erläutert oder festgelegt wird, bezieht er sich immer auf sichtbares Licht im Wellenlängenbereich 380 nm bis 780 nm.

Alle Glaskeramiken des erfindungsgemäßen Erzeugnisses weisen eine besonders hohe Farbneutralität auf, da sie für Licht der Normlichtart D65 eine Farbverschiebung von $C^* \leq 0{,}08$ erzeugen. Der Weißbereich A1 zeichnet sich

also durch eine besonders hohe Farbneutralität der darin enthaltenen Glaskeramiken aus.

Der Weißbereich A1 ergibt sich dabei als ein Bereich entlang der Schwarzkörperkurve im CIExyY-Farbraum, der von ca. 4.500 K bis ca. 9.000 K Farbtemperatur reicht und an der oberen Grenze um einen Wert von ca. y = 0,03 gegenüber der Schwarzkörperkurve nach oben und an der unteren Grenze um ca. y = 0,04 nach unten verschoben ist. Mit der vorliegenden Erfindung kann also bei Durchtritt von weißem Licht durch die Glaskeramik der Farbort des Lichtes im Wesentlichen entlang der Schwarzkörperkurve, sowohl zu etwas höheren (z.B. 6.500 K → 9.000K) als auch zu etwas niedrigeren (z.B. 6.500 K → 4.500 K) Farbtemperaturen verschoben werden, ohne einen unerwünschten Farbstich zu erzeugen. Weißes Licht wird also nach dem Durchtritt immer noch als weißes Licht wahrgenommen.

Der Farbort von Licht kann beispielsweise mit dem Farbmessgerät CS-150 von Konica Minolta gemessen werden. Ebenso ist es möglich das Transmissionsspektrum der Glaskeramik zu messen und damit und mit Hilfe des bekannten Spektrums von D65-Normlicht und der Augenempfindlichkeit eines 2°-Normalbeobachters entsprechend der Vorgaben des CIE den Farbort zu berechnen.

In einer bevorzugten Ausführungsform weist die Glaskeramik des Erzeugnisses die Eigenschaft auf, dass Licht der Normlichtart D65 nach Durchtritt durch die Glaskeramik bezogen auf eine Dicke von 4 mm einen Farbort im Weißbereich A2 aufweist, der im Chromatizitätsdiagramm CIExyY-2° durch folgende Koordinaten bestimmt ist:

| A2 | |
|---|---|
| x | y |
| 0,290 | 0,315 |
| 0,345 | 0,370 |
| 0,341 | 0,320 |
| 0,303 | 0,283 |
| 0,290 | 0,315 |

Alle Glaskeramiken, die diese Eigenschaft aufweisen, zeichnen sich durch eine noch bessere Farbneutralität auf, da sie für Licht der Normlichtart D65 eine Farbverschiebung von nur $C^* \leq 0{,}05$ erzeugen. Außerdem liegt weißes Licht nach Durchtritt durch eine solche bevorzugte Glaskeramik besonders nah an der Schwarzkörperkurve und wird somit vom menschlichen Auge als besonders weiß wahrgenommen.

Eine weitere Eigenschaft einer Glaskeramik ist die Menge an Sauerstoff, der in der Glaskeramik in Form von gelöstem, also nicht kovalent in die Glasmatrix eingebundenem, Sauerstoff vorliegt. Die Menge an gelöstem Sauerstoff resultiert aus dem für die Herstellung verwendeten Schmelzverfahren. Sie kann auf unterschiedliche Weise beeinflusst werden. So führen beispielsweise höhere Schmelz- und Läutertemperaturen zu weniger Sauerstoff in der Glaskeramik. Bei höheren Temperaturen weist die Glasschmelze eine niedrigere Viskosität auf, so dass die entstehenden Gasblasen einfacher aus der Glaskeramik entweichen können.

Ebenso kann der Sauerstoffgehalt durch die Art und Menge des Läutermittels oder die Zugabe von Reduktionsmitteln beeinflusst werden. Zu den Reduktionsmitteln zählen beispielsweise leicht oxidierbare Metalle, Sulfide oder Kohlenstoff, insbesondere Al-oder Si-Pulver, Zucker, Holzkohle, SiC, TiC, MgS oder ZnS. Diese werden in der Schmelze oxidiert und entziehen ihr dadurch freien Sauerstoff. Es resultiert eine Glaskeramik mit einem niedrigeren Gehalt an gelöstem Sauerstoff.

Die Menge an gelöstem Sauerstoff in einer Glaskeramik kann auf bekannte Weise elektrochemisch bestimmt werden. Dies ist beispielsweise in der Publikation "Entwicklung einer Sonde zur Messung des Sauerstoffpartialdrucks in Glasschmelzwannen", Frey, T.; Schaeffer, H.A.; Baucke, F.G. in Glastechnische Berichte; 53, 5; 116-123, 1980 ausführlich beschrieben. Verkürzt dargestellt, werden zunächst Scherben der Glaskeramik in einem geeigneten Behälter aufgeschmolzen. Dann werden temperaturstabile Messelektroden, beispielsweise aus Platin und ein Festelektrolyt mit hoher Leitfähigkeit für Sauerstoffionen aber niedriger Leitfähigkeit für Elektronen, beispielsweise aus Yttrium-stabilisiertem $ZrO_2$, in die Schmelze eingebracht. Dann wird mit Hilfe der Elektroden in Abhängigkeit der Temperatur des geschmolzenen Glases der Sauerstoffpartialdruck bestimmt. Dieser nimmt mit zunehmender Temperatur kontinuierlich zu, da durch die Erhöhung der Temperatur der gelöste Sauerstoff aus der Glaskeramik freigesetzt wird. Die Temperatur, bei der der so bestimmte Sauerstoffpartialdruck den Wert von 1 bar erreicht, wird als $T(pO_2=1\ bar)$ bezeichnet. Je mehr Sauerstoff in einer Glaskeramik gelöst ist, desto niedriger ist die Temperatur $T(pO_2=1\ bar)$, bei der ein Sauerstoffpartialdruck von 1 bar erreicht wird. $T(pO_2=1\ bar)$ ist also eine Eigenschaft der Glaskeramik, die auf die Menge an gelöstem Sauerstoff in der Glaskeramik schließen lässt.

Wenn für die Herstellung der Glaskeramik keine Reduktionsmittel verwendet werden, entspricht die Temperatur $T(pO_2=1\ bar)$ der höchsten Temperatur, die während der Schmelze beziehungsweise Läuterung erreicht wurde. Wenn

Reduktionsmittel verwendet werden, ist die Temperatur T($pO_2$=1 bar) höher als die höchste Temperatur, die während der Schmelze beziehungsweise Läuterung erreicht wurde.

In einer Weiterbildung der Erfindung weist die Glaskeramik des Erzeugnisses eine Temperatur T($pO_2$=1 bar) im Bereich von 1550 °C bis 1700 °C, vorzugsweise 1560 °C bis 1690 °C, besonders bevorzugt im Bereich 1570 - 1680 °C auf. Diese Temperatur ist eine Materialeigenschaft der Glaskeramik, die ein Maß für den an in der Glaskeramik gelösten Sauerstoff darstellt. Je höher der Wert der Temperatur T($pO_2$=1 bar) ist, desto weniger Sauerstoff ist in der Glaskeramik gelöst.

Überraschenderweise hat sich gezeigt, dass ab einer Temperatur T($pO_2$=1 bar) von mehr als 1550 °C die färbende Wirkung des $MoO_3$ so stark erhöht wird, dass zur Erzielung eines niedrigen Lichttransmissionsgrades von weniger als 3,5 % besonders wenig $MoO_3$ eingesetzt werden muss. Da $MoO_3$ ein vergleichsweise teurer Bestandteil der Glaskeramik ist, ist dies wirtschaftlich besonders vorteilhaft.

Vorzugsweise sollte eine Temperatur T($pO_2$=1 bar) von mehr als 1700 °C, bevorzugt mehr als 1690 °C, besonders bevorzugt mehr als 1680 °C vermieden werden. Höhere Werte für T($pO_2$=1 bar) würden entweder die Verwendung entsprechend hoher Temperaturen bei der Schmelze oder die Verwendung großer Mengen an Reduktionsmitteln erfordern. Zu hohe Temperaturen bei der Schmelze wirken sich jedoch negativ auf die Standzeit der Schmelzwanne aus, so dass diese häufiger gewartet werden müsste. Außerdem ist beides aufgrund der benötigten Energie- beziehungsweise Materialkosten wirtschaftlich nachteilig.

Zusätze zur Glaskeramik von polyvalenten Komponenten wie $Fe_2O_3$, $MnO_2$, $V_2O_5$, $CeO_2$, $TiO_2$ haben einen Einfluss auf eine Vielzahl verschiedener Eigenschaften der Glaskeramik. Einige polyvalente Komponenten können beispielsweise eine eigene Farbwirkung aufweisen, andere als Läutermittel fungieren oder die Bildung der Kristalle beeinflussen. Einige können sich auch gleichzeitig auf mehrere Eigenschaften auswirken, wie beispielsweise $Fe_2O_3$, das gleichzeitig färbt und die Läuterung beeinflusst.

$ZrO_2$ ist als Komponente in der Glaskeramik ebenfalls für die Keimbildung vorteilhaft. Dazu ist es bevorzugt in Mengen von 0,1 - 2,5 Gew.-%, vorzugsweise 0,3 - 2,0 Gew.-%, besonders bevorzugt 0,5 - 1,5 Gew.-% in der Glaskeramik enthalten.

Überraschenderweise hat sich gezeigt, dass das Verhältnis von $ZrO_2$ zu $TiO_2$ nicht nur einen Einfluss auf die Keimbildung, sondern auch auf die Temperaturstabilität der Farbneutralität der Glaskeramik hat. Glaskeramiken, die $ZrO_2$ und $TiO_2$ in einem Verhältnis $ZrO_2/TiO_2$ von mindestens 0,1, bevorzugt mindestens 0,15, besonders bevorzugt mindestens 0,2 und höchstens 0,67, bevorzugt höchstens 0,4, besonders bevorzugt höchstens 0,33 aufweisen, zeigen eine verbesserte Stabilität der optischen Eigenschaften bei thermischer Belastung. Mit einem entsprechend gewählten Verhältnis ist es sogar für Kochfelder mit Strahlungsheizelementen möglich, ein Nachdunkeln, Aufhellen oder verschieben des Farbortes im Betrieb zu reduzieren oder sogar weitestgehend auszuschließen.

Deshalb weist die Glaskeramik in einer weiteren bevorzugten Ausführungsform generell oder in Kombination mit den oben genannten bevorzugten Mengen an $ZrO_2$ und $TiO_2$ ein Verhältnis von $ZrO_2/TiO_2$ im Bereich von 0,1 - 0,67, bevorzugt 0,15 - 0,4 und besonders bevorzugt 0,2 - 0,33 auf.

Weiterhin ist es vorteilhaft, wenn die Glaskeramik in genau definierten Mengen einen oder mehrere der folgenden Bestandteile enthält: $V_2O_5$, $Cr_2O_3$, $Fe_2O_3$.

Da $V_2O_5$ schon in sehr geringen Mengen eine Farbortverschiebung bewirkt, kann damit in Kombination mit den oben genannten Bestandteilen $MoO_3$ eine Feinjustierung des Farborts vorgenommen werden. Dazu kann die Glaskeramik 0,0001 - 0,010 Gew.-%, bevorzugt 0,0005 - 0,0080 Gew.-%, besonders bevorzugt 0,0010 - 0,0050 Gew.-% $V_2O_5$ enthalten. Als Verunreinigung liegt $V_2O_5$ typischerweise in Mengen von 1-15 ppm in der Glaskeramik vor. Niedrigere Gehalte sind nur unter sehr hohem Aufwand und mit kostenintensiv aufgereinigten Rohstoffen erreichbar.

Es hat sich gezeigt, dass $Cr_2O_3$ als Zusatz zu den erfindungsgemäßen Glaskeramiken schon in sehr geringen Mengen einen starken Einfluss auf den Farbort, insbesondere auf die y-Koordinate des Farbortes der Glaskeramik in Transmission hat. Eine Zugabe von $Cr_2O_3$ bewirkt eine gezielte Erhöhung des Wertes der y-Koordinate. Zur Feinjustierung des Farborts kann die Glaskeramik 0 - 0,0100 Gew.-%, vorzugsweise 0,0005 - 0,0090, besonders bevorzugt 0,0010 - 0,0060 Gew.-% enthalten. Als unvermeidbare Verunreinigung liegt $Cr_2O_3$ in der Regel in Mengen von 1 - 5 ppm in der Glaskeramik vor.

Weiterhin hat sich eine unerwartete Wechselwirkung bei gleichzeitiger Zugabe von $V_2O_5$ in Kombination mit $Cr_2O_3$ in den oben genannten Mengen gezeigt. Durch gleichzeitige Zugabe von $V_2O_5$ und $Cr_2O_3$ kann gezielt die x-Koordinate des Farbortes eingestellt werden. Je mehr $V_2O_5$ und $Cr_2O_3$ gleichzeitig in der Glaskeramik enthalten sind, desto höher ist der Wert der x-Koordinate. Dafür kann die Glaskeramik optional $V_2O_5$ + $Cr_2O_3$ von 0,001 bis 0,010, vorzugsweise 0,002 bis 0,008, besonders bevorzugt 0,0025 bis 0,0065 enthalten.

Eine besonders gute Farbneutralität unter Einsatz von $MoO_3$ als Hauptfärbemittel kann vorzugsweise erreicht werden, indem die Glaskeramik $MoO_3$, $V_2O_5$ und $Cr_2O_3$ im Verhältnis ($V_2O_5$ + $Cr_2O_3$)/$MoO_3$ im Bereich von wenigstens 0,005 bis 0,5, bevorzugt von wenigstens 0,01 bis 0,2, besonders bevorzugt von wenigstens 0,03 bis 0,15 enthält. In diesem Verhältnisbereich balancieren sich die Einflüsse dieser drei Komponenten so aus, dass eine besonders farbneutrale Glaskeramik resultiert.

Darüber hinaus hat es sich für die Herstellung der Glaskeramiken in kontinuierlichen Schmelzaggregaten als besonders vorteilhaft herausgestellt, wenn die Zusammensetzung der Glaskeramik die folgende Bedingung erfüllt: $Li_2O + SnO_2 < 5,8$, bevorzugt <5,0 besonders bevorzugt <4,5.

$Fe_2O_3$ hat einen starken Einfluss auf die Transmission insbesondere im nahinfraroten Spektralbereich und verringert die färbende Wirkung des $MoO_3$ im sichtbaren Spektralbereich. Zur Feinjustierung insbesondere der Infrarottransmission kann die Glaskeramik 0,05 - 0,3 Gew.-%, vorzugsweise 0,06 - 0,2 Gew.-%, besonders bevorzugt 0,07 - 0,15 Gew.-% $Fe_2O_3$ enthalten.

Die Komponente $MnO_2$ verringert die Färbung durch MoO3. Der $MnO_2$-Gehalt ist deshalb bevorzugt kleiner als 0,5 Gew.-%, besonders bevorzug kleiner als 0,1 Gew.-% oder sogar kleiner als 0,05 Gew.-%. Da $MnO_2$ eine unterstützende Wirkung bei der Läuterung haben kann, kann es vorzugsweise in Mengen von mehr als 0,001 Gew.-%, vorzugsweise mehr als 0,005 Gew.-% in der Glaskeramik enthalten sein.

Die Glaskeramiken enthalten vorzugsweise 0 - 0,4 Gew.-% $Nd_2O_3$, besonders bevorzugt 0 - 0,2 Gew.-%. Insbesondere kann der Gehalt an $Nd_2O_3$ 0 - 0,06 Gew.-% betragen. Besonders bevorzugt wird kein $Nd_2O_3$ eingesetzt und die Glaskeramik ist bis auf unvermeidbare Verunreinigungen technisch frei von $Nd_2O_3$. An Verunreinigungen sind dann in der Regel weniger als 10 ppm enthalten. Bei diesem Farboxid kommt die Farbwirkung über schmale Absorptionsbanden im Bereich bei Wellenlängen von 526, 584 und 748 nm zustande. Licht in diesen Wellenlängenbereich wird beim Durchgang durch die Glaskeramik stärker absorbiert.

Eine erste bevorzugte Zusammensetzung einer Glaskeramik für ein erfindungsgemäßes Erzeugnis besteht in Gew.-% auf Oxidbasis im Wesentlichen aus:

$Li_2O$ 1,0 - 5,5,
$Al_2O_3$ 16 - 26,
$SiO_2$ 58 - 72,
$TiO_2$ 2,0 - <4,0,
$ZrO_2$ 0,1 - 2,5,
ZnO 0 - <2,0,
$SnO_2$ 0,05 - < 0,7,
$MoO_3$ 0,005- 0,12,
$Fe_2O_3$ 0,05 - 0,30,
$Cr_2O_3$ 0 - 0,0100,
$V_2O_5$ 0,0001 - 0,010.

In dieser Zusammensetzung kann es besonders vorteilhaft sein, den Anteil von $MoO_3$ im Bereich 0,015 - 0,100 Gew.-%, vorzugsweise 0,020-0,080 Gew.-% und besonders bevorzugt 0,030 - 0,070 Gew.-% zu wählen und die übrigen Bestandteile in den oben genannten Bereichen zu wählen.

Vorteilhafte Eigenschaften lassen sich insbesondere erzielen, wenn die erste bevorzugte Zusammensetzung in den folgenden Grenzen gewählt wird:

$Li_2O$ 2,5 - 5
$Al_2O_3$ 18 - 24
$SiO_2$ 60 - 70,
$TiO_2$ 2,5 - <4,0
$ZrO_2$ 0,3 - 2,0
ZnO 0,1-1,9
$SnO_2$ 0,06 - < 0,6
$MoO_3$ 0,015 - 0,100
$Fe_2O_3$ 0,06 - 0,20
$Cr_2O_3$ 0,0005 - 0,0090
$V_2O_5$ 0,0005 - 0,0080.

Besonders vorteilhafte Eigenschaften lassen sich insbesondere erzielen, wenn die erste bevorzugte Zusammensetzung in den folgenden Grenzen gewählt wird:

$Li_2O$ 3 - 4,5
$Al_2O_3$ 19 - 23
$SiO_2$ 62 - 68
$TiO_2$ 2,8 - 3,9
$ZrO_2$ 0,5 - 1,5

$ZnO$ 0,5-1,8
$SnO_2$ 0,07 - <0,5
$MoO_3$ 0,020 - 0,080
$Fe_2O_3$ 0,07 - 0,15
$Cr_2O_3$ 0,0010 - 0,0060
$V_2O_5$ 0,0010 - 0,0050.

Eine zweite bevorzugte Zusammensetzung einer Glaskeramik für ein erfindungsgemäßes Erzeugnis besteht in Gew.-% auf Oxidbasis im Wesentlichen aus:

| | |
|---|---|
| $Li_2O$ | 1,0 - 5,5 |
| $\Sigma$ $Na_2O + K_2O$ | 0,1 - < 4 |
| MgO | 0-3 |
| $\Sigma$ CaO + SrO + BaO | 0-5 |
| ZnO | 0 - <2,0 |
| $B_2O_3$ | 0-3 |
| $Al_2O_3$ | 16 - 26 |
| $SiO_2$ | 58 - 72 |
| $TiO_2$ | 2,0 - <4,0 |
| $ZrO_2$ | 0,1 -2,5 |
| $SnO_2$ | 0,05 - < 0,7 |
| $P_2O_5$ | 0-4 |
| $MoO_3$ | 0,005 - 0,12 |
| $Fe_2O_3$ | 0,05 - 0,30 |
| $Nd_2O_3$ | 0-0,4 |
| $Cr_2O_3$ | 0 - 0,0100 |
| $MnO_2$ | 0-0,5 |
| $V_2O_5$ | 0,0001 - 0,0100. |

Eine dritte bevorzugte Zusammensetzung einer solchen Glaskeramik besteht in Gew.-% auf Oxidbasis im Wesentlichen aus:

| | |
|---|---|
| $Li_2O$ | 2,5-5 |
| $\Sigma$ $Na_2O + K_2O$ | 0,1 - < 3 |
| MgO | 0-2,8 |
| $\Sigma$ CaO + SrO + BaO | 0-4 |
| ZnO | 0,1 - 1,9 |
| $B_2O_3$ | 0-3 |
| $Al_2O_3$ | 18 - 24 |
| $SiO_2$ | 60 - 70 |
| $TiO_2$ | 2,5 - <4 |
| $ZrO_2$ | 0,3 - 2,0 |
| $SnO_2$ | 0,05 - < 0,6 |
| $P_2O_5$ | 0 - 4 |
| $MoO_3$ | 0,0015 - 0,1 |
| $Fe_2O_3$ | 0,06 - 0,20 |
| $Nd_2O_3$ | 0 - 0,2 |
| $Cr_2O_3$ | 0,0005 - 0,0090 |
| $MnO_2$ | 0,001 - 0,1 |
| $V_2O_5$ | 0,0005 - 0,0080 |

Eine vierte bevorzugte Zusammensetzung einer solchen Glaskeramik besteht in Gew.-% auf Oxidbasis im Wesentlichen aus:

| | |
|---|---|
| $Li_2O$ | 3 - 4,5 |
| $\Sigma$ $Na_2O + K_2O$ | 0,1 - < 3 |
| MgO | 0-2,8 |
| $\Sigma$ CaO + SrO + BaO | 0 - 4 |
| ZnO | 0,5 - 1,8 |
| $B_2O_3$ | 0 - 3 |
| $Al_2O_3$ | 19 - 23 |
| $SiO_2$ | 60 - 68 |
| $TiO_2$ | 2,8 - 3,9 |
| $ZrO_2$ | 0,5 - 1,5 |
| $SnO_2$ | 0,05 - < 0,6 |
| $P_2O_5$ | 0 - 4 |
| $MoO_3$ | 0,020 - 0,080 |
| $Fe_2O_3$ | 0,007 - 0,15 |
| $Nd_2O_3$ | 0 - 0,06 |
| $Cr_2O_3$ | 0,0010 - 0,0060 |
| $MnO_2$ | 0,005 - 0,1 |
| $V_2O_5$ | 0,0010 - 0,0050. |

Eine fünfte bevorzugte Zusammensetzung einer solchen Glaskeramik besteht in Gew.-% auf Oxidbasis im Wesentlichen aus:

| | |
|---|---|
| $SiO_2$ | 58 - 72 |
| $Al_2O_3$ | 16 - 26 |
| $Li_2O$ | 1,0 - 5,5 |
| $TiO_2$ | 2,0 - <4,0 |
| ZnO | 0 - <2,0 |
| MoO3 | 0,005 - 0,12, |
| $ZrO_2/TiO_2$ | 0,1 - 0,67 |
| $(V_2O_5 + Cr_2O_3)/MoO_3$ | 0,005 - 0,5 |
| $MoO_3/TiO_2$ | >0,002 - <0,050 |
| $Li_2O + SnO_2$ | < 5,8. |

Vorteilhafte Eigenschaften lassen sich insbesondere erzielen, wenn die fünfte bevorzugte Zusammensetzung in den folgenden Grenzen gewählt wird:

| | |
|---|---|
| $SiO_2$ | 58 - 72 |
| $Al_2O_3$ | 16 - 26 |
| $Li_2O$ | 1,0 - 5,5 |
| $TiO_2$ | 2,0 - <4,0 |
| ZnO | 0 - <2,0 |
| MoO3 | 0,005 - 0,12 |
| $ZrO_2/TiO_2$ | 0,15 - 0,4 |
| $(V_2O_5 + Cr_2O_3)/MoO_3$ | 0,01 - 0,2 |
| $MoO_3/TiO_2$ | >0,004 - <0,040 |
| $Li_2O + SnO_2$ | < 5,0. |

Besonders vorteilhafte Eigenschaften lassen sich insbesondere erzielen, wenn die fünfte bevorzugte Zusammensetzung in den folgenden Grenzen gewählt wird:

| | |
|---|---|
| $SiO_2$ | 58 - 72 |

(fortgesetzt)

| | |
|---|---|
| $Al_2O_3$ | 16 - 26 |
| $Li_2O$ | 1,0 - 5,5 |
| $TiO_2$ | 2,0 - <4,0 |
| ZnO | 0 - <2,0 |
| MoO3 | 0,005 - 0,12 |
| $ZrO_2/TiO_2$ | 0,2 - 0,33 |
| $(V_2O_5 + Cr_2O_3)/MoO_3$ | 0,03 - 0,15 |
| $MoO_3/TiO_2$ | >0,008 - <0,030 |
| $Li_2O + SnO_2$ | < 4,5. |

Die Angabe "im Wesentlichen besteht aus" bedeutet, dass die aufgeführten Komponenten wenigstens 96 Gew.-%, bevorzugt wenigstens 98 Gew.-% der Gesamtzusammensetzung betragen sollen.

Diese Glaskeramiken enthalten optional Zusätze chemischer Läutermittel wie $AS_2O_3$, $Sb_2O_3$, $CeO_2$ und von Läuterzusätzen wie Manganoxid, Sulfat-, Halogenid-Verbindungen (F, Cl, Br, I) in Gesamtgehalten bis zu 2,0 Gew.-%. Als Beispiel für Halogenid-Verbindungen sei die Verwendung von NaCl als Gemengerohstoff für die Einbringung von Na genannt.

Aus Gründen des Umwelt- und des Arbeitsschutzes wird vorzugsweise auf den Einsatz von giftigen oder bedenklichen Rohstoffen nach Möglichkeit verzichtet. Daher ist die Glaskeramik vorzugsweise frei von umweltschädlichen Stoffen wie Arsen (As), Antimon (Sb), Cadmium (Cd), Blei (Pb), Caesium (Cs), Rubidium (Rb), Hafnium (Hf), Halogeniden und Schwefel (S), abgesehen von unvermeidbaren Verunreinigungen im Bereich von bevorzugt 0 bis kleiner 0,5 Gewichtsprozent, besonders bevorzugt kleiner 0,1 Gewichtsprozent, ganz besonders bevorzugt kleiner 0,05 Gewichtsprozent. Die Angaben in Gewichtsprozent beziehen sich dabei ebenfalls auf die Glaszusammensetzung auf Oxidbasis.

Jede der genannten bevorzugten Zusammensetzungen eins bis vier kann darüber hinaus ein Verhältnis $MoO_3/TiO_2$ von 0,002 - 0,050, bevorzugt 0,004 - 0,040, besonders bevorzugt 0,008 - 0,030 aufweisen.

Jede der genannten bevorzugten Zusammensetzungen eins bis vier kann darüber hinaus oder alternativ ein Verhältnis $ZrO_2/TiO_2$ von 0,1 - 0,67, bevorzugt 0,15 - 0,4, besonders bevorzugt 0,2 - 0,33 aufweisen.

Jede der genannten bevorzugten Zusammensetzungen eins bis vier kann darüber hinaus oder alternativ ein Verhältnis $(V_2O_5+Cr_2O_3)/MoO_3$ von 0,005 - 0,5, bevorzugt 0,01 - 0,2, besonders bevorzugt 0,0,3 - 0,15 aufweisen.

Verbindungen einer Vielzahl von Elementen wie z. B. den Alkalien Rb, Cs oder Elementen wie Mn, Hf sind bei großtechnisch verwendeten Gemengerohstoffen übliche Verunreinigungen. Andere Verbindungen wie z.B. solche der Elemente B, Cl, F, W, Nb, Ta, Y, Seltene Erden, Bi, Co, Cu, Cr, Ni können ebenfalls als Verunreinigung großtechnisch verwendeter Gemengerohstoffe, typischerweise im ppm-Bereich, enthalten sein. 1000 ppm entsprechen 0,1 Gew.-%.

Weitere färbende Bestandteile wie CoO, CuO oder NiO können enthalten sein, sofern sie sich nicht negativ auf die Färbung der Glaskeramik auswirken. Deshalb enthält die Glaskeramik vorzugsweise 0 - 250 ppm, vorzugsweise 0 - 100 ppm, besonders bevorzugt 0 - 50 ppm CoO und 0 - 250 ppm, vorzugsweise 0 - 100 ppm, besonders bevorzugt 0 - 50 ppm CuO und 0 - 250 ppm, vorzugsweise 0 - 100 ppm, besonders bevorzugt 0 - 50 ppm NiO. Weiterbevorzugt enthält die Glaskeramik bis auf unvermeidliche Verunreinigungen weder CoO noch CuO noch NiO. Typische Verunreinigungen für diese Bestandteile liegen im einstelligen ppm-Bereich.

Allgemein können entweder natürlich vorkommende Rohstoffe oder chemisch aufbereitete beziehungsweise synthetisch hergestellte Rohstoffe oder Mischungen davon für die Herstellung verwendet werden. Natürlich vorkommende Rohstoffe sind in der Regel kostengünstiger als äquivalente chemisch aufbereitete oder synthetisierte Rohstoffe. Die Verwendbarkeit natürlicher Rohstoffe ist allerdings durch die üblicherweise hohen Mengen an Verunreinigungen beschränkt. Beispiele für natürlich vorkommende Rohstoffe sind Quarzsand, Rutil, Spodumen und Petalit. Die Mengen an Verunreinigungen können dabei je nach Rohstoffart und -quelle sehr unterschiedlich ausfallen. So bestehen beispielsweise sowohl Spodumen als auch Petalit hauptsächlich aus Lithium-, Aluminium- und Siliziumoxid. Spodumen enthält aufgrund der Kristallstruktur und der geochemischen Besonderheiten, die für die Bildung von Spodumen bzw. Petalit erforderlich sind, deutlich mehr Verunreinigungen an Eisenoxid als Petalit. Darüber hinaus können Spodumene aus unterschiedlichen Mienen oder sogar aus unterschiedlichen Chargen derselben Miene eine breite Spanne von Verunreinigungen an Eisenoxid enthalten.

Chemisch aufbereitete oder synthetisch hergestellte Rohstoffe enthalten in der Regel nur sehr wenige Verunreinigungen. Darüber hinaus sind diese Verunreinigungen relativ konstant. Sie schwanken also nur in sehr geringem Maße zwischen verschiedenen Chargen. Dies ist vorteilhaft für die Planung des Gemenges für die Schmelze, da eine Kompensation von Chargenschwankungen praktisch nicht erforderlich ist. Beispiele für gebräuchliche aufbereitete oder synthetisierte Rohstoffe sind Lithiumcarbonat oder Titandioxid-Pulver.

Die Verunreinigungen durch typische Spurenelemente bei den verwendeten technischen Rohstoffen liegen üblicherweise bei bis zu 200 ppm $B_2O_3$, 30 ppm Cl, 1 ppm CoO, 3 ppm $Cr_2O_3$, 200 ppm $Cs_2O$, 3 ppm CuO, 200 ppm F, 400 ppm $HfO_2$, 3 ppm NiO, 500 ppm $Rb_2O$, 1-15 ppm $V_2O_5$.

Vorzugsweise beträgt die Dicke der Glaskeramik 1 bis 15 mm, vorzugsweise 2 bis 10 mm, besonders bevorzugt 3 bis 6 mm. Die Dicke von ungefähr 4 mm hat sich zu einem de facto Standard für viele Anwendungen wie Kochfelder, Kaminsichtscheiben oder Backofentüren entwickelt und ist deshalb von äußerster wirtschaftlicher Bedeutung.

Die Glaskeramik kann beidseitig glatt ausgeführt sein. Glatt bedeutet hierbei insbesondere, dass sie eine flache gewalzte, gefloatete oder polierte Oberfläche aufweisen kann. Der Vorteil einer beidseitig glatt ausgeführten Glaskeramik ist, dass Leuchtanzeigen besonders verzerrungsfrei durch die Glaskeramik hindurch wahrgenommen werden können. Alternativ kann die Glaskeramik auch auf der Seite, die der Nutzseite abgewandt ist, eine Noppenstruktur aufweisen. So weisen beispielsweise Kochfelder aus Glaskeramik auf ihrer Unterseite häufig eine Noppenstruktur auf, die zur Erhöhung der mechanischen Belastbarkeit beiträgt. Die Nutzseite ist dabei die Seite der Glaskeramik, die dem Benutzer des Erzeugnisses zugewandt ist. Im Falle eines Kochfeldes ist dies die Oberseite.

Bei genoppten Glaskeramiken kann auf der genoppten Seite eine Beschichtung aus einem transparenten Material vorgesehen sein. Der Brechungsindex des Materials sollte im sichtbaren Wellenlängenbereich von 380 nm bis 780 nm möglichst nah am Brechungsindex der Glaskeramik liegen. Vorzugsweise sollte er bei einer Wellenlänge von 550 nm nicht mehr als 0,2, besonders bevorzugt nicht mehr als 0,1 von dem der Glaskeramik abweichen. Ein beispielhaftes Material, dass diese Eigenschaften erfüllt, ist Silikonharz. Silikonharz wird vorzugsweise unpigmentiert verwendet, um die Transmission zu maximieren. Bei Bedarf können aber auch Pigmente oder Farbstoffe hinzugefügt werden, wenn eine Einfärbung der Beschichtung oder eine optische Streuwirkung gewünscht ist. Die Beschichtung kann die Täler zwischen den Noppen wenigstens teilweise, vorzugsweise vollständig auffüllen. Eine solche Beschichtung kann über ihre Immersionswirkung die optische Verzerrung von transmittiertem Licht, die durch die Linsenwirkung der Noppen entsteht, reduzieren oder sogar ausgleichen.

Alternativ kann eine transparente Folie auf die Noppen aufgeklebt werden, die ebenfalls einen Ausgleich der optischen Verzerrung bewirkt. Hierfür sind Folien geeignet, die transparent sind und eine für die Verwendung ausreichende Temperaturbeständigkeit aufweisen. Vorzugsweise sollte der Brechungsindex der Folie bei einer Wellenlänge von 550 nm nicht mehr als 0,2, besonders bevorzugt nicht mehr als 0,1 von dem der Glaskeramik abweichen. Es eignen sich beispielsweise Folien aus Polycarbonat, die mittels eines Acrylat-Klebstoffes, insbesondere in Form einer Acrylat-Folie, auf die genoppte Seite der Glaskeramik aufgeklebt werden. Mittels Acrylat-Klebstoffen angeklebte Polycarbonat-Folien sind aufgrund ihrer hohen Transmission und thermischen Stabilität insbesondere für Anzeigenbereiche von Kochfeldern geeignet. Andere Beispiele für geeignete Folien sind Folien aus Polyethylen, Polyester oder Polyethylennaphthalat. Auch diese Folien können mittels Acrylat-Klebstoff, insbesondere mittels einer Acrylat-Folie, an der Glaskeramik befestigt werden. Ebenso ist die Verwendung anderer Klebstoffe möglich, insbesondere anderer Klebefolien. Prinzipiell ist jeder Kleber geeignet, der auf Glas- und Kunststoffoberflächen haftet, transparent ist und eine für die Verwendung ausreichende Temperaturbeständigkeit aufweist. Vorzugsweise sollte der Brechungsindex des Klebers bei einer Wellenlänge von 550 nm nicht mehr als 0,2, besonders bevorzugt nicht mehr als 0,1 von dem der Glaskeramik abweichen. Als andere Kleber können beispielsweise Silikonkleber zum Einsatz kommen.

Alternativ kann auch Dünnglas oder Ultradünnglas anstelle der Folie verwendet werden. Im Falle von Folien aus Polymeren kann der Kleber, unabhängig von der Art des Klebers, die Noppentäler teilweise oder vollständig auffüllen. Im Falle von Dünnglas oder Ultradünnglas sollte der Kleber die Noppentäler vollständig ausfüllen, da sich Gläser um Unterschied zu Folien aus Polymeren nicht an die Form der Noppen anschmiegen können.

In einer Weiterbildung der Erfindung kann das Erzeugnis auch optische Filter aufweisen, um beispielsweise den Farbort von Leuchtanzeigen anzupassen. So ist es beispielsweise denkbar in einer Bedieneinheit mehrere weiße Lichtquellen, insbesondere LEDs, unterschiedlicher Bauart und somit Lichtfarbe einzusetzen. Dann kann durch gezielte Filter die Lichtfarbe der unterschiedlichen Lichtquellen aneinander angepasst werden.

Auch andere Farbfilter können in dem Erzeugnis vorgesehen sein, beispielsweise, um bei Verwendung von Leuchtelementen, deren Licht nach Durchtritt durch die Glaskeramik ohne Farbfilter innerhalb des Weißbereichs A1 liegen, Leuchterscheinungen außerhalb des Weißbereichs A1 zu erzeugen. So kann beispielsweise aus weißem Licht nach Transmission durch einen solchen Farbfilter und die Glaskeramik farbiges Licht erzeugt werden, beispielsweise blaues, rotes, grünes oder Licht mit praktisch jeder beliebigen anderen Farbe. Solche Farbfilter weisen vorzugsweise ein C* von mehr als 0,08, vorzugsweise mehr als 0,16, besonders bevorzugt mehr als 0,24 auf, um Farben mit besonders hoher Farbsättigung darstellen zu können.

Solche Filter können beispielsweise in Form aufgedruckter oder aufgetragener Schichten oder angedrückter oder aufkaschierter Folien oder Platten vorliegen. Filter in Form von Schichten können mittels üblicher Verfahren hergestellt werden. Dazu zählen beispielsweise Drucken, insbesondere Sieb-, Flexo- und Tintenstrahldruck, Schlitzdüsen-Beschichtung, Rakeln und Vakuumbeschichtungsverfahren, insbesondere Plasma-CVD und Sputtern. Filter können entweder unmittelbar auf die Glaskeramik aufkaschiert, -gedruckt odergetragen werden, oder mittelbar auf einen Träger wie eine Folie oder Platte, der dann zwischen Leuchtmittel und Glaskeramik angeordnet wird.

In einer bevorzugten Ausführungsform weißt das Erzeugnis zusätzlich zur Glaskeramik ein Mittel zur Reduktion des Lichttransmissionsgrades auf. Ein solches Mittel kann insbesondere eine auf die Glaskeramik aufgebrachte Beschichtung, eine aufgeklebte oder angedrückte Folie oder eine aufgeklebte oder angedrückte Platte sein. Besonders bevorzugt ist ein solches Mittel bei bestimmungsgemäßen Gebrauch auf der vom Betrachter abgewandten Seite der Glaskeramik angeordnet.

Ein solches Mittel zur Reduktion des Lichttransmissionsgrades weist zusammen mit der Glaskeramik einen Lichttransmissionsgrad von weniger als 0,5 %, bevorzugt weniger als 0,1 %, besonders bevorzugt weniger als 0,01 % oder sogar von weniger als 0,001 % auf. Beispielsweise bei Ausgestaltung der Mittel als Metallfolie, insbesondere Folie aus Aluminium, mit einer Dicke von wenigstens 100 $\mu$m können auch Lichttransmissionsgrade von deutlich weniger als 0,001 % erzielt werden. Auch mit Beschichtungen auf Basis von Sol-Gel, Silikon oder Emaille mit entsprechender Pigmentierung und Schichtdicke lassen sich derart niedrige Transmissionswerte erzielen. Auch gesputterte Schichten, beispielsweise aus Metallen wie Aluminium, Silber oder Edelstahl, können bei ausreichender Schichtdicke eine entsprechend niedrige Transmission aufweisen.

Ein solches Mittel zur Reduktion des Lichttransmissionsgrades weist vorzugsweise zumindest eine Aussparung auf, durch die Licht hindurchtreten kann. Eine solche Aussparung kann beispielsweise ein Fenster für eine Leuchtanzeige bilden. Alternativ kann eine solche Aussparung beispielsweise in Form eines Symbols, Zeichens, Buchstabens, geometrischer Formen oder einer Zahl vorliegen. Bei Hinterleuchtung einer solchen Aussparung mit einem Leuchtelement resultiert dann, dass vom Benutzer des Erzeugnisses beispielsweise ein leuchtendes Symbol wahrgenommen wird, dass nicht oder nur schwach wahrnehmbar ist, wenn das Leuchtelement ausgeschaltet ist. Dadurch wird die Betriebssicherheit verbessert, da der Nutzer stets aktivierte Zeichen und Symbole gut wahrnehmen kann und somit keine Verwechslungsgefahr mit nicht aktivierten Zeichen oder Symbolen besteht.

Wenn das Mittel zur Reduktion des Lichttransmissionsgrades als Beschichtung vorliegt, kann eine solche Aussparung entweder von vornherein nicht mit einer solchen Beschichtung versehen werden oder die Beschichtung kann an dieser Stelle nachträglich wieder abgetragen werden. Dies kann beispielsweise per Laser, insbesondere mittels CO2-Laser oder Ultrakurzpulslaser, erfolgen. Ebenso kann das Abtragen nasschemisch erfolgen. Bei Verwendung von Folien oder Platten kann eine Aussparung beispielsweise durch Ausschneiden der entsprechenden Teile der Folie oder Platte erzeugt werden.

Abgesehen von Aussparungen, kann ein Mittel zur Reduktion des Lichttransmissionsgrades vollflächig oder nur an Teilflächen des Abdeckmittels angeordnet sein. Zur Erzielung einer besonders hohen Reduktion des Lichttransmissionsgrades können auch mehrere dieser Mittel unmittelbar oder mittelbar hintereinander angeordnet sein.

In einer weiteren bevorzugten Ausführungsform weißt das Erzeugnis wenigstens einen Diffusor auf. Ein Diffusor ist bei bestimmungsgemäßen Gebrauch auf der vom Betrachter abgewandten Seite des Erzeugnisses beziehungsweise der Glaskeramik angeordnet. Unter einem Diffusor ist dabei ein Mittel zu verstehen, das einen Lichttransmissionsgrad von wenigstens 10% hat und aufgrund seiner Struktur dazu geeignet ist, gerichtetes Licht, das durch den Diffusor hindurchtritt, durch optische Streuung zumindest anteilig in diffuses Licht umzuwandeln.

Diffusoren können beispielsweise in Form von Beschichtungen, Folien oder Platten vorliegen. Die Streuung des Lichts kann beispielsweise von Partikeln geeigneter Größe, die in der Beschichtung, Folie oder Platte enthalten sind, verursacht werden. Solche Partikel können beispielsweise eine Größe aufweisen, die in der Größenordnung der Wellenlänge von sichtbarem Licht oder darunter liegt. Weiterhin weisen solche Partikel einen Brechungsindex auf, der sich vom Brechungsindex der sie umgebenden Beschichtung, Folie oder Platte unterscheidet. Solche Partikel können beispielsweise aus $TiO_2$ bestehen oder dieses enthalten. Besonders bevorzugt liegen die Partikel in der Beschichtung, Folie oder Platte räumlich homogen verteilt vor.

Alternativ kann die Streuwirkung eines Diffusors beispielsweise auch über einen Bereich mit ausreichend hoher Rauheit der Oberfläche der Glaskeramik, einer Beschichtung, einer Folie oder einer Platte erzielt werden. Eine Oberfläche mit hoher Rauheit kann beispielsweise mittels abrasiver Verfahren wie Sandstrahlen oder über Ätzprozesse hergestellt werden. Unter einer ausreichend hohen Rauheit ist dabei eine mittlere Rauheit $R_a$ zwischen 100 nm und 10 $\mu$m, vorzugsweise zwischen 200 nm und 2 $\mu$m, besonders bevorzugt zwischen 500 nm und 1 $\mu$m, zu verstehen.

Ein solcher Diffusor bewirkt, dass Licht eines Leuchtelements, dass auf den Diffusor gerichtet ist, eine im Wesentlichen homogene Leuchterscheinung erzeugt. Dies gilt insbesondere für Leuchtelemente mit punktförmigen Leuchtmitteln wie LEDs.

Ein Diffusor kann auch insbesondere im Bereich der Aussparung eines Mittels zur Reduktion des Lichttransmissionsgrades angeordnet sein. Dort kann er teilweise oder vollständig mit der Aussparung überlappen. Dies hat den Vorteil, dass die Aussparung bei Durchleuchtung mit einem Leuchtelement besonders homogen ausgeleuchtet werden kann.

Bei Kombination eines Diffusors mit einem Mittel zur Reduktion des Lichttransmissionsgrades, kann der Diffusor beispielsweise zwischen der Glaskeramik und dem Mittel, zwischen dem Mittel und einem Leuchtelement oder zwischen zwei Mitteln zur Reduktion des Lichttransmissionsgrades angeordnet sein. Dabei kann er jeweils auch mit dem oder den Mitteln zur Reduktion überlappen. Bei der Anordnung zwischen zwei Mitteln zur Reduktion, müssen beide Mittel

überlappende Aussparungen aufweisen und der Diffusor muss zumindest teilweise im Bereich der Überlappung angeordnet sein.

Das Erzeugnis kann auf der Glaskeramik weitere Beschichtungen aufweisen. Dazu zählen beispielsweise dekorative Beschichtungen, Schichten zur Markierung bestimmter Bereiche, Schrift, Symbole, Kratzschutzschichten, Entspiegelungsschichten, Verspiegelungsschichten, elektrisch leitfähige Schichten, Schichten zur Erhöhung der Reflexion im Infraroten, Schichten zur Verbesserung der Reinigbarkeit, Anti-Glare-Schichten, Anti-Fingerprint-Schichten, Antimikrobielle-Schichten oder Kombinationen davon. Solche Schichten können je nach Ausführung auf einer oder auf beiden Seiten der Glaskeramik vollflächig oder auf Teilflächen angeordnet sein. Bei solchen Beschichtungen kann es sich entweder um einzelne Schichten, oder um Stapel mehrerer über- oder hintereinander angeordneter Schichten handeln.

In einer bevorzugten Ausführungsform, kann das Erzeugnis eine Vielzahl unterschiedlicher Beleuchtungssysteme aufweisen oder damit kombiniert werden. Solche Beleuchtungssysteme können beispielsweise zur dekorativen Beleuchtung oder zur Erzeugung von Leuchtanzeigen zum Einsatz kommen. Dabei können sie auf eine Vielzahl unterschiedlicher lichttechnischer Lösungen zurückgreifen. Sie können beispielsweise LEDs, OLEDs, Laserdioden, Projektoren, Lichtleiter, pixelbasierte Anzeigen, insbesondere LCD oder AM-OLED, Segmentanzeigen, insbesondere 7-Segment-Anzeigen und/oder punktförmige, linienförmige oder flächige Leuchtelemente aufweisen. Die Beleuchtungssysteme können eine einzelne unveränderbare Lichtfarbe aufweisen. Sie können aber auch veränderbare Lichtfarben, Mischfarben aus Licht unterschiedlicher Farben, insbesondere Rot, Grün und/oder Blau, oder spektral breite Lichtemission, insbesondere weißes Licht, aussenden. Unter einer spektral breiten Lichtemission wird ein Emissionsspektrum mit einem "Full Width Half Maximum" FWHM von mehr als 50 nm verstanden.

Die Erfindung wird nachfolgend unter Bezugnahme auf die Abbildungen näher erläutert.

Figur 1 zeigt

- die Schwarzkörperkurve ("BBC"),
- die Farbkoordinaten von Licht der Normlichtart D65 bei direkter Betrachtung ohne Glaskeramik, "D65"),
- die Lage der Weißbereiche A1 und A2 sowie
- die Farbkoordinaten von Licht der Normlichtart D65 nach Durchtritt durch eine Glaskeramik der Beispiele 1 - 16 ("Ex. 1-16")

in einem Ausschnitt des CIE-Chromatizitätsdiagramms im CIExyY Farbraum.

Figur 2 zeigt dieselben Daten wie Figur 1 zur Übersicht der Lage aber nicht in einem Ausschnitt, sondern unter Darstellung des gesamten CIExyY Farbraumes.

Figur 3 zeigt die Abhängigkeit des spezifischen Widerstandes von der Frequenz des Wechselstromes für unterschiedliche Temperaturen. Die Messungen wurden an einer Glaskeramik gemäß Beispiel 17 vorgenommen.

Figur 4 zeigt die Abhängigkeit der Permittivitätszahl von der Frequenz des Wechselstromes für unterschiedliche Temperaturen. Die Messungen wurden an einer Glaskeramik gemäß Beispiel 17 vorgenommen.

Figur 5 zeigt die Abhängigkeit des Verlustfaktors von der Frequenz des Wechselstromes für unterschiedliche Temperaturen. Die Messungen wurden an einer Glaskeramik gemäß Beispiel 17 vorgenommen.

Figur 6 zeigt die Abhängigkeit der Permittivitätszahl von der Temperatur der Glaskeramik für eine Frequenz des Wechselstroms von 1,9 GHz und 5,1 GHz. Die Messungen wurden an einer Glaskeramik gemäß Beispiel 17 vorgenommen.

Figur 7 zeigt die Abhängigkeit des Verlustfaktors von der Temperatur der Glaskeramik für eine Frequenz des Wechselstroms von 1,9 GHz und 5,1 GHz. Die Messungen wurden an einer Glaskeramik gemäß Beispiel 17 vorgenommen.

Figur 8 zeigt die Abhängigkeit der Permittivitätszahl von der Temperatur der Glaskeramik für eine Frequenz des Wechselstroms von 1 MHz, 1,9 GHz und 5,1 GHz. Die Messungen wurden an einer Glaskeramik gemäß Beispiel 17 vorgenommen.

Figur 9 zeigt die Abhängigkeit des Verlustfaktors von der Temperatur der Glaskeramik für eine Frequenz des Wechselstroms von 10 KHz, 100 KHz, 1 MHz, 1,9 GHz und 5,1 GHz. Die Messungen wurden an einer Glaskeramik

gemäß Beispiel 17 vorgenommen.

Figur 10 a zeigt den spektralen Transmissionsgrad einer erfindungsgemäßen Glaskeramik (Bezugszeichen 1) bei einer Dicke von 4 mm im Wellenlängenbereich 380 nm bis 780 nm. Zusätzlich zeigt Figur 10 a den spektralen Transmissionsgrad derselben Glaskeramik mit einer zusätzlichen Kratzschutzschicht (Bezugszeichen 2) bei einer Dicke von 4 mm im Wellenlängenbereich 380 nm bis 780 nm.

Figur 10 b zeigt die gleichen Daten wie Figur 10 a, aber im Wellenlängenbereich 250 - 2.500 nm.

Die Schwarzkörperkurve BBC in Fig. 1 und 2 zeigt den Farbort des von einem Schwarzkörperstrahler emittierten Lichtes bei unterschiedlichen Temperaturen des Strahlers bei direkter Betrachtung (ohne Glaskeramik). Da die Sonne ein Schwarzkörperstrahler ist, wird Licht, dessen Farbort auf der Kurve BCC liegt, als besonders weiß, natürlich und angenehm empfunden.

Licht der Normlichtart D 65 liegt bei direkter Betrachtung (ohne Glaskeramik) bei den Farbkoordinaten x = 0,3127, y = 0,3290. Bei Durchtritt von Normlicht D65 durch eine absorbierende Glaskeramik kann sich der Farbort des Lichts durch die Absorption der Glaskeramik verschieben. Normlicht D65 entspricht näherungsweise einem Schwarzkörperstrahler mit einer Temperatur von ungefähr 6.500 K.

Bei allen Beispielen 1 bis 17 wird der Farbort von Licht der Normlichtart D65 bei Durchtritt durch eine entsprechende Probe nur minimal entlang der BBC verschoben. Die Beispiele 1 bis 4 liegen fast exakt auf der BBC. Für alle Beispiele liegt der Farbort im Bereich A1. Die Beispiele 1 bis 4 liegen auch innerhalb A2. Beispiel 5 liegt leicht unterhalb der BBC und knapp außerhalb von A2. Somit verhalten sich alle Beispiele sehr farbneutral gegenüber transmittiertem Licht. Es kommt nur zu minimalen Farbverschiebungen.

Anhand der Tabelle 1 werden die Beispiele 1 bis 17 näher erläutert. Bei den Beispielen 1 bis 17 handelt es sich um Glaskeramiken, die zur Verwendung in erfindungsgemäßen Erzeugnissen geeignet sind. Bei Vergleichsbeispiel V1 handelt es sich um eine Glaskeramik, die nicht der Erfindung entspricht.

Die kristallisierbaren Ausgangsgläser der Beispiele aus Tabelle 1 wurden in Anlagen zur großtechnischen Herstellung von LAS-Glaskeramiken hergestellt. Schmelzprozesse für die großtechnische Herstellung von LAS-Glaskeramiken sind unter anderem aus der EP 2 226 303 A2 und aus "Allgemeine Technologie des Glases, Grundlagen des Schmelzens und der Formgebung", Prof. Dr. H. A. Schaeffer, Erlangen September 1985 bekannt. Die kristallisierbaren Ausgangsgläser werden im Folgenden auch als Grünglas oder Grüngläser bezeichnet.

Für die Herstellung wurden in der Industrie übliche Gemengerohstoffe verwendet, beispielsweise:

| Bestandteil | Übliche Rohstoffe |
|---|---|
| $Al_2O_3$ | Spodumen, Petalit, Aluminiumtrihydroxid |
| BaO | Barium karbonat |
| CaO | Dolomit, Kalzium-Feldspat |
| $Fe_2O_3$ | Eisenoxid, Spodumen |
| $K_2O$ | Kalium-Feldspat, Kaliumnitrat |
| $Li_2O$ | Spodumen, Petalit, Lithiumkarbonat |
| MgO | Magnesit, Dolomit |
| $Na_2O$ | Natrium-Feldspat, Natriumnitrat, Natriumchlorid |
| $SiO_2$ | Quarzsand, Spodumen, Petalit |
| $SnO_2$ | Zinnoxid |
| $TiO_2$ | Rutil, synthetisches Titandioxid |
| $V_2O_5$ | Vanadiumoxid |
| ZnO | Zinkoxid |
| $ZrO_2$ | Zirkonsilikat |

Als Schmelzaggregat wurde eine kontinuierlich arbeitende Hybrid-Wanne mit Oxyfuel-Brennern und elektrischer Zusatzbeheizung verwendet. Es ist aber ebenso denkbar, eine kontinuierlich arbeitende vollelektrische Wanne oder eine ausschließlich fossil beheizte Wanne als Schmelzaggregat zu verwenden. Bei fossil beheizten Wannen kann

als Brennstoff alternativ auch eine Mischung aus fossilem Brennstoff und Wasserstoff oder wasserstoffbasierter Brennstoff ohne fossilen Anteil zum Einsatz kommen. Die Verwendung synthetischer Brennstoffe ist ebenso denkbar.

Die Bezeichnung "kontinuierlich arbeitend" bedeutet dabei, dass dem Schmelzaggregat kontinuierlich an einem Ende Gemenge zugeführt und am gegenüberliegenden Ende geschmolzenes Glas entnommen wird.

Dem gegenüber stehen diskontinuierlich arbeitende Schmelzaggregate. Bei diskontinuierlich arbeitenden Aggregaten wird das Gemenge in einen ausreichend kalten Tiegel gefüllt. Der Tiegel wird erhitzt, so dass das Gemenge aufgeschmolzen wird und eine Glasschmelze entsteht. Anschließend wird die Glasschmelze aus dem Tiegel ausgegossen und der Heißformgebung unterzogen. Wenn der Tiegel wieder ausreichend abgekühlt ist, kann er erneut mit Gemenge befüllt werden und ein neuer Schmelzvorgang vorgenommen werden. Einem solchen Aggregat kann also nur diskontinuierlich Glas entnommen werden.

Die spezifische Schmelzleistung eines Aggregats gibt an, wie viele Tonnen Glas bezogen auf die Grundfläche des Aggregats pro Tag hergestellt werden können. Sie wird in der Einheit Tonnen pro Quadratmeter und Tag, also $t/(m^2$ d), angegeben.

Die Grundfläche des Aggregats ergibt sich aus dem Abstand zwischen der Einlage für das Gemenge am vorderen Ende und dem Verteiler am hinteren Ende des Aggregats, also der gesamten Länge der Glasschmelze im Aggregat sowie der Breite der Glasschmelze im Aggregat. Ein Aggregat mit einer derart bestimmten Länge von 15 m und einer Breite von 8 m weist beispielsweise eine Grundfläche von 120 $m^2$ auf. Für die Herstellung von Glaskeramik sind Aggregate mit Grundflächen zwischen ca. 50 und 250 $m^2$ gebräuchlich.

Die spezifische Schmelzleistung hängt auch davon ab, wie das Aggregat betrieben wird. Je heißer es betrieben wird, desto schneller laufen thermische Prozesse wie Einschmelzen und Läutern in der Glasschmelze ab. Deshalb können bei höheren Temperaturen dem Aggregat höhere Menge an Glas entnommen werden.

Wird ein Aggregat mit sehr niedriger spezifischer Schmelzleistung betrieben, verschlechtert das die Wirtschaftlichkeit des Herstellprozesses. Bei Betrieb mit einer sehr hohen spezifischen Schmelzleistung besteht das Risiko, dass sich der hohe Durchsatz negativ auf die Glasqualität auswirkt. Dies kann beispielsweise der Fall sein, wenn die Glasschmelze eine so kurze Verweildauer im Aggregat hat, dass Aufschmelzprozesse nicht vollständig stattfinden können oder für die Läuterung nicht ausreichend Zeit zur Verfügung steht.

Erfindungsgemäße Glaskeramiken können beispielsweise in Aggregaten mit einer spezifischen Schmelzleistung von 0,3 $t/(m^2$ d) bis 1,5 $t/(m^2$ d), bevorzugt 0,4 bis 1,2 $t/(m^2$ d), besonders bevorzugt 0,5 bis 1,1 $t/(m^2$ d) hergestellt werden.

Überraschenderweise weisen Glaskeramiken, die in einem kontinuierlich arbeitenden Schmelzaggregat mit einer spezifischen Leistung von wenigstens 0,3 $t/(m^2$ d) und höchstens 1,5 $t/(m^2$ d) hergestellt wurden, vor allem gegenüber diskontinuierlich in Tiegeln geschmolzenen Glaskeramiken verbesserte Eigenschaften wie eine besonders gute Farbneutralität und einen reduzierten Bedarf an färbenden Komponenten in der Zusammensetzung der Glaskeramik auf.

Für die Beispiele aus Tabelle 1 wurde folgender Verfahrensablauf eingehalten:

- Bereitstellen des Gemenges und Einbringen in die Wanne. Zur Verbesserung des Aufschmelzverhaltens sind dem Gemenge üblicherweise Scherben aus dem geschlossenen Scherbenkreislauf der Wanne oder gegebenenfalls aus Recycling-Kreisläufen beigegeben.
- Aufschmelzen des Gemenges.
- Läutern der Glasschmelze bei Temperaturen der Glasschmelze von wenigstens 1550 °C, bevorzugt wenigstens 1600 °C, besonders bevorzugt wenigstens 1650 °C. Die Obergrenze der Läutertemperatur ergibt sich in der Regel aus der Temperaturbeständigkeit des Wannenmaterials. Üblicherweise liegt die Läutertemperatur unterhalb von 1850 °C, bevorzugt unterhalb von 1800 °C, besonders bevorzugt unterhalb von 1750 °C. Bei Temperaturen von mehr als 1700 °C müssen in der Regel zusätzliche Hochtemperaturläuteraggregate eingesetzt werden. Dies bedeutet einen zusätzlichen energetischen Aufwand in der Herstellung, der aber unter Umständen durch eine größere spezifische Schmelzleistung und eine verbesserte Glasqualität wettgemacht werden kann.
- Abkühlen der Glasschmelze auf Temperaturen, bei denen eine Heißformgebung wie beispielsweise das Walzen möglich ist.
- Durchführen der Heißformgebung, beispielsweise Walzen auf eine Dicke des Glasbandes von beispielsweise 4.
- Abkühlen auf Raumtemperatur, vereinzeln zu Platten und abstapeln.

Die Beispiele aus Tabelle 1 wurden mit einer spezifischen Schmelzleistung von 1 $t/(m^2$ d) hergestellt. Die Beispiele wurden jeweils als rechteckige Platten mit Maßen von 520 x 590 x 4 mm hergestellt.

Der Wassergehalt derart hergestellter kristallisierbarer Gläser zur Herstellung der Glaskeramiken liegt abhängig von der Wahl der Gemengerohstoffe und den Prozessbedingungen bei der Schmelze vorzugsweise zwischen 0,01 und 0,09 mol/l. Die Methode zur Bestimmung des Wassergehalts ist z. B. in der EP 1074520 A1 beschrieben. Der Wassergehalt kann durch die Wahl der Gemengerohstoffe und den Prozessbedingungen angepasst werden.

Die Keramisierung der Proben ist mit einem Keramisierungsverfahren in einem Durchlaufofen mit den folgenden

Schritten erfolgt:

a) Aufheizen von Raumtemperatur auf 740 °C mit einer Heizrate von 30 K/min.,
b) Temperaturerhöhung von 740 auf 825 °C mit einer Heizrate von 6 K/min.,
c) Temperaturerhöhung von 825 °C bis 930 °C mit einer Heizrate von 18 K/min.,
d) Haltezeit von 6 min. bei Maximaltemperatur 930 °C,
d) Abkühlen auf 800°C mit einer Kühlrate von 13 K/min., dann schnelle Abkühlung auf Raumtemperatur durch Ausschleusen der Probe aus dem Ofen.

Es ist bekannt, dass die Temperaturwerte, Haltedauern und Heizraten beim Keramisieren ausgehend von dem oben genannten Beispiel angepasst werden können, um die Eigenschaften der resultierenden Glaskeramik zu optimieren. Insbesondere kann es vorteilhaft sein, die Heiz- beziehungsweise Kühlraten höher zu wählen, als in dem angegebenen Beispiel. Die Heiz-/Kühlraten sollten jedoch die folgenden Werte nicht unterschreiten: 20 K/min. in Schritt a), 2 K/min. in Schritt b), 8 K/min. in Schritt c) und Abkühlen mit einer Kühlrate von mindestens 8 K/min. in Schritt d). Größere Raten wirken sich neben dem Einfluss auf die Materialeigenschaften positiv auf die Taktzeiten des Keramisierungsverfahrens aus. Die Temperatur in Schritt d) kann beispielsweise im Bereich 890 - 940 °C variiert werden.

Die tatsächlich erreichbaren Heizraten hängen in der Praxis sowohl von der Geometrie bzw. der thermischen Masse der zu keramisierenden Platten ab, als auch von den zur Verfügung stehenden Heizaggregaten.

Derart keramisierte Platten können an ihrer Oberfläche eine glasige, amorphe und an Lithium verarmte Oberflächenzone aufweisen. Solche Zonen sind beispielsweise aus der WO 2012 019 833 A1 bekannt. Sie verbessern die Beständigkeit der Glaskeramik gegen chemische Angriffe. Die glasige Zone ist zwischen 20 und 5.000 nm dick, vorzugsweise zwischen 30 und 3.000 nm, besonders bevorzugt zwischen 50 und 1.500 nm. Mittels Polieren ist es möglich, die glasige Zone nach der Keramisierung von einer Glaskeramikoberfläche zu entfernen.

Die Verunreinigungen durch typische Spurenelemente bei den verwendeten technischen Rohstoffen lagen sofern nicht näher spezifiziert bei bis zu 200 ppm $B_2O_3$, 30 ppm Cl, 1 ppm CoO, 3 ppm $Cr_2O_3$, 200 ppm $Cs_2O$, 3 ppm CuO, 200 ppm F, 400 ppm $HfO_2$, 3 ppm NiO, 500 ppm $Rb_2O$, 5 ppm $V_2O_5$.

Tabelle 1 zeigt die Zusammensetzung der Beispiele 1 bis 17 und des Vergleichsbeispiels V1 sowie einige ausgewählte Eigenschaften nach der Keramisierung. Die Beispiele enthalten bis auf übliche Verunreinigungen kein $Sb_2O_3$ und $AS_2O_3$. Alle Beispiele enthalten $MoO_3$ in den entsprechenden Mengen als Hauptfärbemittel.

Das Vergleichsbeispiel V1 wurde nicht wie die Beispiele 1 bis 17 gemäß dem oben beschriebenen Verfahren in einem kontinuierlichen Schmelzaggregat hergestellt, sondern in einem diskontinuierlichen Verfahren. Das kristallisierbare Ausgangsglas wurde jeweils aus in der Glasindustrie üblichen technischen Gemengerohstoffen bei Temperaturen von 1620 °C, 4 Stunden eingeschmolzen. Nach dem Einschmelzen des Gemenges in einem Tiegel aus gesintertem Kieselglas wurde die Schmelzen in Pt/Rh-Tiegeln mit Innentiegel aus Kieselglas umgegossen und bei Temperaturen von 1600 °C, 60 Minuten durch Rühren homogenisiert. Nach dieser Homogenisierung wurde das Glas für 2 Stunden bei 1640 °C geläutert. Anschließend wurden Stücke von ca. 120 x 140 x 30 $mm^3$ Größe gegossen und in einem Kühlofen beginnend ab 640 °C auf Raumtemperatur abgekühlt, um Spannungen abzubauen. Die Gussstücke wurden in die für die Untersuchungen und für die Keramisierung benötigten Größen unterteilt. Die Keramisierung erfolgte mit dem oben beschriebenen Verfahren, mit dem auch die Beispiele 1 bis 17 keramisiert wurden.

Das Vergleichsbeispiel weist trotz des relativ hohen Gehalts an MoO3 von 0,11 Gew.-% einen Lichttransmissionsgrad bei einer Dicke von 4 mm größer als 4 % auf. Durch diesen hohen Lichttransmissionsgrad ist diese Glaskeramik aufgrund der schlechteren Blickdichtheit nicht zur Verwendung in erfindungsgemäßen Erzeugnissen geeignet. Darüber hinaus weist das Vergleichsbeispiel einen unerwünscht hohen Anteil von mehr als 2 Gew.-% ZnO auf.

Das Vergleichsbeispiel weist eine Temperatur $T(pO_2{=}1$ bar) von weniger als 1550 °C auf. Es enthält also relativ viel in der Glaskeramik gelösten Sauerstoff. Im Vergleich dazu weisen die Beispiele 1 - 5 höhere Temperaturen $T(pO_2{=}1$ bar) im Bereich von 1592 °C - 1633 °C auf. Somit enthalten sie weniger gelösten Sauerstoff als das Vergleichsbeispiel V1.

Die Beispiele 1 bis 17 enthalten 7 bis 35 ppm $V_2O_5$ und 10 bis 41 ppm $Cr_2O_3$. Damit ist es wie aus Figur 1 ersichtlich möglich, den Farbort von transmittiertem Licht der Normlichtart D65 innerhalb des Weißbereichs A1 sehr genau auf einen gewünschten Wert einzustellen. Das Vergleichsbeispiel V1 enthält weder $V_2O_5$ noch $Cr_2O_3$.

In Tabelle 1 sind die spektralen Transmissionsgrade bei verschiedenen Wellenlängen im sichtbaren und nahinfraroten Spektralbereich aufgeführt. Alle angegebenen Werte beziehen sich auf eine Dicke der Glaskeramik von 4 mm. Aus den Werten zeigt sich der für die erfindungsgemäßen Erzeugnisse vorteilhafte Transmissionsverlauf mit niedriger Transmission im sichtbaren Spektralbereich von 380 bis 780 nm und einer hohen Transmission im Nahinfraroten von 780 bis 4000 nm. Durch einen solchen Verlauf ermöglicht die Glaskeramik die Herstellung von Abdeckplatten, die den Durchblick verhindert, aber Wärmestrahlung oder IR-Strahlung für optische Kommunikation oder Sensorik durchlassen.

Auch bei diesen Werten zeigt sich, dass die Transmission des Vergleichsbeispiels V1 bei den angegebenen Wellenlängen deutlich höher als die der Beispiele 1 bis 17 ist.

Die Farbkoordinaten im CIExyY-Farbraum (1931, 2°) von Licht der Normlichtart D65 nach Durchtritt durch eine 4 mm Dicke Probe sind ebenfalls in Tabelle 1 aufgeführt. Die Y-Koordinate ist identisch zum Lichttransmissionsgrad $\tau_{vis}$ gemäß DIN EN 410.

Für die Beispiele wurde die thermische Ausdehnung im Temperaturbereich 20 °C bis 700 °C bestimmt. Alle Beispiele liegen bei Werten von deutlich weniger als 1 x $10^{-6}$ /K. Aufgrund dieser niedrigen Ausdehnung sind diese Glaskeramiken besonders zur Verwendung in Erzeugnissen geeignet, die hohen Temperaturwechselbelastungen oder hohen lokalen Temperaturgradienten unterliegen, wie beispielsweise Kochfeldern.

Mittels Röntgenbeugung konnte bestätigt werden, dass alle Beispiele als Hauptkristallphase Hochquarzmischkristall ("HQMK") enthalten. Dies zeigt sich auch darin, dass die Proben bei einer Dicke von 4 mm praktisch keine mit dem bloßen Auge wahrnehmbare Streuung für sichtbares Licht aufwiesen.

Repräsentativ für alle Beispiele wurden anhand von Beispiel 17 die elektrischen Eigenschaften der Glaskeramiken untersucht. Die Ergebnisse sind in den Figuren 3 bis 9 dargestellt. Die Glaskeramiken zeigen für LAS-Glaskeramiken typische elektrische Eigenschaften. Der spezifische Widerstand für elektrischen Strom, $R_{spec}$, nimmt mit steigender Temperatur der Glaskeramik ab. Zusätzlich nimmt der spezifische Widerstand für Wechselstrom mit steigender Frequenz des Wechselstroms ab. Hierzu zeigt die Figur 3 beispielhaft Messdaten des spezifischen Widerstandes, die für Temperaturen von -15°C bis 350°C und für Frequenzen von 10 KHz bis 40 MHz aufgezeichnet wurden. Die Werte erstrecken sich über mehr als 4 Zehnerpotenzen von 5,5*$10^4$ $\Omega$cm bis 1,8*$10^9$ $\Omega$cm. Dies ist vermutlich bei den entsprechenden Bedingungen mit einer veränderten Beweglichkeit von Ladungsträgern in der Glaskeramik zu erklären.

Dementsprechend ändern sich für elektrische Wechselspannungen, die insbesondere zwischen der Oberseite und der Unterseite der Glaskeramik anliegen können, auch die elektrischen Eigenschaften der Glaskeramik. Diese Eigenschaften sind, hier quantifiziert anhand von Messwerten der Kenngrößen der Permittivitätszahl $\varepsilon_r$ und des Verlustfaktor tan ($\delta$) der Glaskeramik, beispielhaft in den Figuren 4 bis 9 in Abhängigkeit von der Frequenz der angelegten Wechselspannung und von Temperatur der Glaskeramik dargestellt. Die Figuren 4 und 5 zeigen die Frequenzabhängigkeit der Permittivitätszahl und des Verlustfaktors für verschiedene Temperaturen, die insbesondere bei Kochanwendungen eines Glaskeramik Kochfelds zum Tragen kommen, über einen Frequenzbereich von 10 KHz bis 40 MHz. Die Figuren 6 und 7 zeigen die Temperaturabhängigkeit der Permittivitätszahl und des Verlustfaktors für die Frequenzen 1,9 GHz und 5,1 GHz. Diese Frequenzen sind beispielhaft für einen Frequenzbereich der bei Mikrowellenbeheizungsanwendungen oder bei drahtlosen Signalnetzen, wie WLAN/WiFi, von Bedeutung sind. Die Figuren 8 und 9 zeigen ebenso die Temperaturabhängigkeiten wie in den Figuren 6 und 7, erweitert für beispielhafte Frequenzen aus dem Bereich 10 KHz bis 40 MHz und hier für einen speziell für Kochanwendungen typischen Temperaturbereich von bis zu 350°C.

Elektrische Wechselspannungen können als Messsignal oder auch zur Leistungsübertragung technische Anwendungen finden. Insbesondere im Frequenzbereich von 10 KHz bis 40 MHz können in der Messtechnik beispielsweise kapazitive Berührungssensoren (Touchsensoren) oder auch insbesondere durch die bestehende Temperaturabhängigkeit der elektrischen Eigenschaften kapazitive oder induktive Temperaturmessungen dargestellt werden. Für Berührsensoren ist insbesondere die Permittivitätszahl bei Raumtemperatur von Bedeutung. Die Werte für die Permittivitätszahl liegen hier beispielhaft bei 25°C im Bereich 7,9 bis 8,3 stabil über einen relevanten Frequenzbereich von 10 KHz bis 40 MHz (Figur 4). Die Glaskeramiken eignen sich für kapazitive Berührsensoren besonders gut, da die Permittivitätszahl deutlich höhere Werte aufweist, als bei anderen Materialien mit typischerweise niedrigeren Permittivitätszahlen. Zum Vergleich sei auf Kunststoffe (2-4), Naturstoffe wie Holz oder Papier (1-4), oder Glas (etwa 6-7) hingewiesen.

Die insbesondere im niedrigeren Frequenzbereich (10 Khz bis 40 MHz) stark ausgeprägte Temperaturabhängigkeit der Permittivitätszahl und des Verlustfaktors (Figuren 8 und 9) kann beispielsweise für kapazitive oder induktive Temperaturmessungen genutzt werden. So kann eine kapazitive Temperaturmessung beispielsweise zwischen einer Sensorelektrode unterhalb der Glaskeramik und einem Topfboden oberhalb der Glaskeramik ausgebildet sein. Die für kapazitive Messungen relevante Permittivitätszahl ändert sich hier beispielhaft zwischen 25°C und 350°C von 8,1 auf 25,8 um etwa einen Faktor 3, der auf bekannte Weise in eine elektrische Signaländerung umgesetzt werden kann. Genauso kann der sich über die Temperatur verändernde Verlustfaktor für eine induktive Temperaturmessung genutzt werden. So verändert sich beispielsweise der Übertragungsverlust zwischen einer Sendespule unterhalb der Glaskeramik und einer Sensorspule in einem Gargefäß oberhalb der Glaskeramik bei einer Signalfrequenz von 10 KHz zwischen 25°C und 350°C von 0,03 auf 8,9 um etwa einen Faktor 300 oder zwischen 50°C und 150°C von 0,05 auf 0,25 um etwa einen Faktor 5. Auch eine Sensorspule unterhalb der Glaskeramik wäre über ihre Selbstinduktion sensitiv auf die temperaturabhängige Veränderung der elektrischen Eigenschaft des Glaskeramikmaterials in deren Nähe.

Die temperaturabhängigen Veränderungen des Verlustfaktors sind auch für eine induktive Beheizung relevant, wie sie beispielsweise in Induktionskochfeldern zu finden ist. Hier wird typischerweise mit Frequenzen zwischen 10 KHz und 100 KHz gearbeitet. Ein Anstieg des Verlustfaktors mit der Temperatur in diesem Frequenzbereich (Figur 9) führt zu einer Abnahme der Leistungsübertragung in das Gargefäß beziehungsweise zu einer messbaren Erhöhung der Verlustleistung im Schwingkreis der induktiven Beheizung. Dies kann auch indirekt für eine Temperaturmessung am Gargefäß genutzt werden.

Weitere Anwendungen, in denen insbesondere der Verlustfaktor bei Leistungsübertragungen für unterschiedliche Frequenzen eine Rolle spielt, sind induktive Ladevorrichtungen beispielsweise für mobile Endgeräte auf Kochfeldplatten oder Arbeitsplatten aus Glaskeramik oder auch bei Anwendungen im Bereich der Elektromobilität. Auch galvanisch getrennte Signalübertragungen durch Glaskeramik, die als Trenn- und Schutzwand bei biologisch, chemisch oder physikalisch (Strahlung) geschützten und isolierten Bereichen Anwendung findet, gehen die elektrischen Eigenschaften in der oben beispielhaft beschriebenen Weise ein.

Als weiteres Ausführungsbeispiel wurde eine 4 mm Glaskeramik gemäß Beispiel 17 mit einer Kratzschutzschicht beschichtet. Die Schicht wurde mittels reaktivem Mittelfrequenzsputtern wie in WO 2014/135490 A1 beschrieben hergestellt. Bei der Beschichtung handelt es sich um eine röntgenamorphe AlSiN-Schicht mit einem Al:Si-Verhältnis von 50:50 at.-%. Die Schichtdicke beträgt etwa 1.200 nm. In Figur 10 a und 10 b sind zum Vergleich die spektralen Transmissionsgrade der unbeschichteten Glaskeramik (Referenzzeichen 1) sowie der Glaskeramik mit Beschichtung (Referenzzeichen 2) gegen die Wellenlänge des Lichts in nm aufgetragen. Durch die im wesentlichen transparente Beschichtung entsteht im Vergleich zur unbeschichteten Glaskeramik lediglich eine Interferenzmodulierung der Transmission. Dadurch wird der Lichttransmissionsgrad leicht abgesenkt. Die Absenkung beträgt ca. 8 % relativ, was einer absoluten Absenkung von ca. 0,2 % entspricht. Der Farbort von Licht der Normlichtart D65 wird durch die Beschichtung nur so gering geändert, dass die Änderung mit bloßem Auge nicht wahrnehmbar ist. Der Farbunterschied des transmittierten Lichtes lässt sich mit folgender Formel berechnen:

$$\Delta C = \sqrt{(x_{GK} - x_{GK+S})^2 + (y_{GK} - y_{GK+S})^2}.$$

Dabei sind $x_{GK}$/ $y_{GK}$ die Farbkoordinaten von Licht der Normlichtart D65 nach Durchtritt durch die unbeschichtete Glaskeramik (hier: $x_{GK}$=0,3184, $y_{GK}$=0,3270) und $x_{GK+s}$ / $y_{GK+s}$ die Farbkoordinaten nach Durchtritt durch die Glaskeramik mit Beschichtung (hier: $x_{GK+S}$=0,3202, $y_{GK+S}$=0,3284). Für die in Figur 3 gezeigte Beschichtung beträgt ΔC demnach lediglich 0,002 und ist somit mit dem menschlichen Auge nicht wahrnehmbar.

Zum Vergleich sei nochmals auf die Farbkoordinaten von Licht der Normlichtart D65 bei direkter Betrachtung, also ohne eine Glaskeramik, verwiesen: x = 0,3127, y = 0,3290. In diesem Fall wird die Farbe von Licht der Normlichtart D65 also weder durch die Glaskeramik alleine noch durch die Kombination von Glaskeramik mit Kratzschutzbeschichtung merklich verschoben.

Erfindungsgemäße Erzeugnisse können in einer Vielzahl von Anwendungen verwendet werden.

In einer Ausführungsform kann ein erfindungsgemäßes Erzeugnis in einem Kochgerät als Kochplatte verwendet werden.

In einer weiteren Ausführungsform kann ein erfindungsgemäßes Erzeugnis zur Abdeckung einer Benutzerschnittstelle in einem Bedienfeld für die Steuerung wenigstens eines Haushaltsgeräts, insbesondere eines Kochgeräts, eines Backofens, eines Kühlschranks oder einer Dunstabzugshabe verwendet werden.

In einer Weiterentwicklung dieser Ausführungsform kann das Bedienfeld für die Steuerung mehrerer Haushaltsgeräte, beispielsweise für ein Kochgerät, einen Backofen und eine Dunstabzugshaube, ausgelegt sein. Eine Dunstabzugshaube kann auch in Form einer sogenannten Downdraft-Abzugshaube in ein Kochgerät mit einer entsprechenden Kochplatte aus Glaskeramik integriert sein. Hierfür kann dann das Erzeugnis beziehungsweise die Glaskeramik eine Aussparung aufweisen, in die die Downdraft-Abzugshaube eingesetzt werden kann.

In einer weiteren Ausführungsform kann das Erzeugnis als Abdeckung einer Dunstabzugshaube, insbesondere einer Downdraft-Dunstabzugshaube, ausgeführt sein. Insbesondere in modularen Kochsystemen können Downdraft-Abzugshauben als separates Modul ohne Kochfunktion ausgeführt sein. Da solche Module aber dafür geeignet sein müssen, in Kombination mit Modulen mit Kochfunktion eingesetzt zu werden, müssen sie ebenfalls die für Glaskeramiken üblichen, sehr hohen Anforderungen an die thermische und chemische Beständigkeit aufweisen. Darüber hinaus können solche Module auch eine Benutzerschnittstelle zur Steuerung des Downdraft-Abzugs aufweisen. Auch für solche Benutzerschnittstellen muss die oben genannte Aufgabe bezüglich farbneutraler Anzeigen erfüllt werden.

In einer weiteren Ausführungsform kann das Erzeugnis als Verblendung einer Dunstabzugshaube ausgeführt sein. In dieser Ausführungsform kann es ästhetisch besonders ansprechend sein, wenn das Kochfeld des Kochgerätes und die Verblendung der Dunstabzugshaube die gleiche Glaskeramik aufweisen. Diese Ausführungsform ist besonders vorteilhaft, wenn die Dunstabzugshaube eine hinter der Glaskeramik angeordnete Benutzerschnittstelle zur Steuerung der Dunstabzugshaube oder eine Benutzerschnittstelle zur kombinierten Steuerung der Dunstabzugshaube und des Kochgeräts aufweisen.

In Backöfen, insbesondere Pyrolysebacköfen, kann das erfindungsgemäße Erzeugnis als Teil einer Türverglasung verwendet werden.

In einer weiteren Ausführungsform kann ein erfindungsgemäßes Erzeugnis in einem Küchenmöbel, insbesondere einem Küchenschrank, einer Einbauküche oder einem Kochtisch als Arbeitsplatte verwendet werden.

In einer weiteren Ausführungsform kann ein erfindungsgemäßes Erzeugnis als Spritzschutzplatte für Küchen

verwendet werden. So kann es beispielsweise in Form einer Platte als Rückwand einer Küche, beispielsweise anstelle eines Fliesenspiegels, verwendet werden. Ebenso kann es als freistehende Spritzschutzplatte an einer Kochinsel vorgesehen sein. Eine solche Spritzschutzplatte kann entweder fest montiert sein, oder versenkbar ausgeführt sein. Versenkbare Spritzschutzplatten können für den Betrieb eines Kochgerätes ausgefahren werden, um als Spritzschutz zu fungieren. Nach Beenden des Kochvorgangs kann sie dann beispielsweise im Kochgerät oder in der Arbeitsplatte versenkt werden. Hierbei kann es ästhetisch besonders ansprechend sein, wenn sowohl die Kochplatte des Kochgerätes als auch die Spritzschutzplatte die gleiche Glaskeramik eines erfindungsgemäßen Erzeugnisses aufweisen. Zusätzlich kann die Arbeitsplatte der Küche ebenfalls die gleiche Glaskeramik enthalten.

Spritzschutzplatten für Küchen werden regelmäßig während dem Kochen mit heißen Flüssigkeiten wie Salzwasser oder pflanzlichen oder tierischen Fetten bespritzt. Außerdem werden sie regelmäßig mit chemischen Reinigungsmittel gesäubert. Da erfindungsgemäße Erzeugnisse thermisch und chemisch sehr stabil sind, sind sie besonders gut für die Verwendung als Spritzschutzplatte für Küchen geeignet.

In einer weiteren Ausführungsform kann ein erfindungsgemäßes Erzeugnis in einem Laborgerät, insbesondere einer Heizplatte, einem Ofen, einer Waage oder einem Labormöbel, insbesondere einem Abzug, einem Schrank oder einem Tisch zur Abdeckung einer Benutzerschnittstelle oder als Arbeitsplatte verwendet werden.

In einer weiteren Ausführungsform kann ein erfindungsgemäßes Erzeugnis als Kaminsichtscheibe, als Sichtscheiben für Verbrennungs- und andere Hochtemperaturprozesskammern, als Brandschutzverglasung, als Teil eines Gehäuses für mobile elektronische Geräte, insbesondere Mobiltelefone und Tablet-Computer, als Abdeckung für IR-Heizstrahler oder Gasbrenner, insbesondere in Gas-Grills, als Sichtblende oder als Abdeckung für Induktionsladestationen, beispielsweise für Kraftfahrzeuge in Automobilen, beispielsweise im Armaturenbereich oder der Mittelkonsole verwendet werden.

Dabei kann das Erzeugnis aufgrund seiner thermischen und chemischen Beständigkeit in Kaminen sowohl für Innenräume, als auch für den Außenbereich verwendet werden. Derartige Kamine können beispielsweise mit Gas, Holz oder Pellets befeuert werden.

Bei Hochtemperaturprozesskammern kann es sich beispielsweise um Vakuumbeschichtungsanlagen handeln.

In Grillgeräten kann ein erfindungsgemäßes Erzeugnis auf vielfältige Art und Weise eingesetzt werden. Es kann verwendet werden, um ein Schutzabdeckung für Gasbrenner bereitzustellen, die die Gasbrenner im ausgeschalteten Zustand optisch verdeckt, im eingeschalteten Zustand aber die Flamme erkennen lässt. Da die Farbe der Flamme ein wichtiges Indiz für den ordnungsgemäßen Betrieb des Grills ist, ist eine farbechte Darstellung, wie sie mit dem vorliegenden Erzeugnis möglich ist, besonders vorteilhaft für die Betriebssicherheit.

Darüber hinaus kann das Erzeugnis als Grillfläche insbesondere in Gas-, Elektro- oder Kohlegrills oder als Sichtfenster in der Haube eines Grills verwendet werden.

Tabelle 1: Beispiele von Glaskeramiken für erfindungsgemäße Erzeugnisse

| **Beispiel** | | 1 | 2 | 3 | 4 | 5 | V1 |
|---|---|---|---|---|---|---|---|
| **Zusammensetzung (Gew.-%)** | | | | | | | |
| $Al_2O_3$ | Gew.-% | 21,29 | 21,29 | 21,25 | 21,24 | 21,16 | 21,24 |
| BaO | Gew.-% | 1,31 | 1,32 | 1,32 | 1,32 | 1,33 | 1,19 |
| CaO | Gew.-% | 0,44 | 0,44 | 0,441 | 0,438 | 0,436 | 0,55 |
| $Cr_2O_3$ | Gew.-% | 0,0041 | 0,0024 | 0,0024 | 0,0023 | 0,001 | 0 |
| $Fe_2O_3$ | Gew.-% | 0,091 | 0,092 | 0,091 | 0,090 | 0,098 | 0,070 |
| $K_2O$ | Gew.-% | 0,41 | 0,41 | 0,41 | 0,41 | 0,40 | 0,57 |
| $Li_2O$ | Gew.-% | 3,78 | 3,76 | 3,78 | 3,77 | 3,80 | 3,45 |
| MgO | Gew.-% | 0,31 | 0,30 | 0,31 | 0,30 | 0,30 | 0,35 |
| $MnO_2$ | Gew.-% | 0,021 | 0,021 | 0,021 | 0,021 | 0,021 | 0,01 |
| $MoO_3$ | Gew.-% | 0,052 | 0,055 | 0,055 | 0,054 | 0,068 | 0,11 |
| $Na_2O$ | Gew.-% | 0,56 | 0,57 | 0,56 | 0,56 | 0,56 | 0,52 |
| $P_2O_5$ | Gew.-% | 0,052 | 0,052 | 0,052 | 0,054 | 0,052 | 0 |
| $SiO_2$ | Gew.-% | 65,21 | 65,19 | 65,22 | 65,25 | 65,26 | 65,55 |
| $SnO_2$ | Gew.-% | 0,28 | 0,28 | 0,28 | 0,28 | 0,28 | 0,25 |

(fortgesetzt)

| Beispiel | | 1 | 2 | 3 | 4 | 5 | V1 |
|---|---|---|---|---|---|---|---|
| **Zusammensetzung (Gew.-%)** | | | | | | | |
| SrO | Gew.-% | 0,0073 | 0,0073 | 0,0074 | 0,0075 | 0,0096 | 0 |
| $TiO_2$ | Gew.-% | 3,64 | 3,64 | 3,65 | 3,65 | 3,66 | 3,41 |
| $V_2O_5$ | Gew.-% | 0,0023 | 0,0007 | 0,0008 | 0,0009 | 0,0035 | 0 |
| ZnO | Gew.-% | 1,58 | 1,59 | 1,58 | 1,58 | 1,58 | 2,12 |
| $ZrO_2$ | Gew.-% | 0,90 | 0,91 | 0,91 | 0,91 | 0,92 | 1,05 |
| **Spektraler Lichttransmissionsgrad bei einer Dicke von 4 mm** | | | | | | | |
| 470 nm | % | 1,7 | 2,5 | 2,4 | 2,4 | 1,2 | 5,4 |
| 600 nm | % | 1,5 | 1,7 | 1,6 | 1,6 | 0,8 | |
| 700 nm | % | 4,1 | 4,0 | 3,9 | 4,0 | 2,9 | |
| 950 nm | % | 35,0 | 33,7 | 33,5 | 33,7 | 33,1 | 46,6 |
| 1600 nm | % | 70,0 | 69,6 | 69,6 | 69,9 | 67,8 | 73,8 |
| **Lichttransmissionsgrad bei einer Dicke von 4 mm** | | | | | | | |
| Y | % | 1,5 | 1,8 | 1,7 | 1,7 | 0,8 | 34,1 |
| **Farbkoordinaten in Transmission bei einer Dicke von 4 mm** | | | | | | | |
| x | | 0,330 | 0,299 | 0,298 | 0,298 | 0,308 | 0,305 |
| y | | 0,334 | 0,310 | 0,308 | 0,307 | 0,286 | 0,297 |
| **gelöster Sauerstoff** | | | | | | | |
| T (pO2=1 bar) | °C | 1633 | 1608 | 1592 | 1604 | 1610 | 1543 |
| **Sonstiges** | | | | | | | |
| Dichte | $g/cm^3$ | 2,46 | 2,46 | 2,46 | 2,46 | 2,46 | |
| **Beispiel** | | 6 | 7 | 8 | 9 | 10 | 11 |
| **Zusammensetzung (Gew.-%)** | | | | | | | |
| $Al_2O_3$ | Gew.-% | 21,24 | 21,29 | 21,29 | 21,29 | 21,29 | 21,29 |
| BaO | Gew.-% | 1,31 | 1,31 | 1,31 | 1,31 | 1,31 | 1,31 |
| CaO | Gew.-% | 0,44 | 0,44 | 0,44 | 0,44 | 0,44 | 0,44 |
| $Cr_2O_3$ | Gew.-% | 0,0031 | 0,0025 | 0,0035 | 0,0035 | 0,0025 | 0,0035 |
| $Fe_2O_3$ | Gew.-% | 0,089 | 0,089 | 0,089 | 0,094 | 0,089 | 0,089 |
| $K_2O$ | Gew.-% | 0,43 | 0,41 | 0,41 | 0,41 | 0,41 | 0,41 |
| $Li_2O$ | Gew.-% | 3,74 | 3,74 | 3,74 | 3,74 | 3,74 | 3,74 |
| MgO | Gew.-% | 0,30 | 0,31 | 0,31 | 0,31 | 0,31 | 0,31 |
| $MnO_2$ | Gew.-% | 0,020 | 0,021 | 0,021 | 0,021 | 0,021 | 0,021 |
| $MoO_3$ | Gew.-% | 0,048 | 0,046 | 0,046 | 0,059 | 0,051 | 0,046 |
| $Na_2O$ | Gew.-% | 0,56 | 0,56 | 0,56 | 0,56 | 0,56 | 0,56 |
| $P_2O_5$ | Gew.-% | 0,021 | 0,052 | 0,052 | 0,052 | 0,052 | 0,052 |
| $SiO_2$ | Gew.-% | 65,27 | 65,21 | 65,21 | 65,21 | 65,21 | 65,21 |
| $SnO_2$ | Gew.-% | 0,28 | 0,28 | 0,28 | 0,28 | 0,28 | 0,28 |
| SrO | Gew.-% | 0,01 | 0,0073 | 0,0073 | 0,0073 | 0,0073 | 0,0073 |

(fortgesetzt)

| Beispiel | | 6 | 7 | 8 | 9 | 10 | 11 |
|---|---|---|---|---|---|---|---|
| **Zusammensetzung (Gew.-%)** | | | | | | | |
| $TiO_2$ | Gew.-% | 3,64 | 3,64 | 3,64 | 3,64 | 3,64 | 3,64 |
| $V_2O_5$ | Gew.-% | 0,0017 | - | - | - | - | 0,0026 |
| ZnO | Gew.-% | 1,58 | 1,58 | 1,58 | 1,58 | 1,58 | 1,58 |
| $ZrO_2$ | Gew.-% | 0,90 | 0,90 | 0,90 | 0,90 | 0,90 | 0,90 |
| **Lichttransmissionsgrad bei einer Dicke von 4 mm** | | | | | | | |
| Y | % | 2,3 | 2,87 | 2,53 | 1,96 | 2,31 | 2,24 |
| **Farbkoordinaten in Transmission bei einer Dicke von 4 mm** | | | | | | | |
| x | | 0,320 | 0,303 | 0,312 | 0,328 | 0,298 | 0,326 |
| y | | 0,327 | 0,319 | 0,333 | 0,333 | 0,312 | 0,337 |
| **Beispiel** | | 12 | 13 | 14 | 15 | 16 | 17 |
| **Zusammensetzung (Gew.-%)** | | | | | | | |
| $Al_2O_3$ | Gew.-% | 21,29 | 21,29 | 21,29 | 21,29 | 21,29 | 21,34 |
| BaO | Gew.-% | 1,31 | 1,31 | 1,31 | 1,31 | 1,31 | 1,31 |
| CaO | Gew.-% | 0,44 | 0,44 | 0,44 | 0,44 | 0,44 | 0,44 |
| $Cr_2O_3$ | Gew.-% | 0,0025 | 0,0035 | 0,0035 | 0,0025 | 0,0035 | 0,0033 |
| $Fe_2O_3$ | Gew.-% | 0,094 | 0,094 | 0,089 | 0,094 | 0,094 | 0,092 |
| $K_2O$ | Gew.-% | 0,41 | 0,41 | 0,41 | 0,41 | 0,41 | 0,41 |
| $Li_2O$ | Gew.-% | 3,74 | 3,74 | 3,74 | 3,74 | 3,74 | 3,76 |
| MgO | Gew.-% | 0,31 | 0,31 | 0,31 | 0,31 | 0,31 | 0,30 |
| $MnO_2$ | Gew.-% | 0,021 | 0,021 | 0,021 | 0,021 | 0,021 | 0,021 |
| $MoO_3$ | Gew.-% | 0,046 | 0,046 | 0,051 | 0,051 | 0,051 | 0,054 |
| $Na_2O$ | Gew.-% | 0,56 | 0,56 | 0,56 | 0,56 | 0,56 | 0,57 |
| $P_2O_5$ | Gew.-% | 0,052 | 0,052 | 0,052 | 0,052 | 0,052 | 0,052 |
| $SiO_2$ | Gew.-% | 65,21 | 65,21 | 65,21 | 65,21 | 65,21 | 65,16 |
| $SnO_2$ | Gew.-% | 0,28 | 0,28 | 0,28 | 0,28 | 0,28 | 0,28 |
| SrO | Gew.-% | 0,0073 | 0,0073 | 0,0073 | 0,0073 | 0,0073 | 0,0073 |
| $TiO_2$ | Gew.-% | 3,64 | 3,64 | 3,64 | 3,64 | 3,64 | 3,64 |
| $V_2O_5$ | Gew.-% | 0,0026 | 0,0026 | 0,0026 | 0,0026 | 0,0026 | 0,0015 |
| ZnO | Gew.-% | 1,58 | 1,58 | 1,58 | 1,58 | 1,58 | 1,59 |
| $ZrO_2$ | Gew.-% | 0,90 | 0,90 | 0,90 | 0,90 | 0,90 | 0,91 |
| **Spektraler Lichttransmissionsgrad bei einer Dicke von 4 mm** | | | | | | | |
| 470 nm | % | | | | | | 2,6 |
| 600 nm | % | | | | | | 2,1 |
| 700 nm | % | | | | | | 5,2 |
| 950 nm | % | | | | | | 37,4 |
| 1600 nm | % | | | | | | 71,3 |

(fortgesetzt)

| | | | | | | | |
|---|---|---|---|---|---|---|---|
| **Lichttransmissionsgrad bei einer Dicke von 4 mm** | | | | | | | |
| Y | % | 1,97 | 1,73 | 1,8 | 1,59 | 1,4 | 2,1 |
| **Farbkoordinaten in Transmission bei einer Dicke von 4 mm** | | | | | | | |
| x | | 0,332 | 0,342 | 0,321 | 0,328 | 0,337 | 0,318 |
| y | | 0,323 | 0,337 | 0,330 | 0,317 | 0,332 | 0,327 |
| **Sonstiges** | | | | | | | |
| Dichte | g/cm$^3$ | | | | | | **2,54** |

## Patentansprüche

1. Erzeugnis, umfassend eine transparente, volumengefärbte Glaskeramik, wobei die Glaskeramik folgende Bestandteile in Gew.-% auf Oxidbasis enthält

| | |
|---|---|
| $SiO_2$ | 58 - 72, |
| $Al_2O_3$ | 16 -26, |
| $Li_2O$ | 1,0 - 5,5, |
| $TiO_2$ | 2,0 - <4,0, |
| ZnO | 0 - <2,0, |
| MoO3 | 0,005 - 0,12 |

wobei die Glaskeramik bezogen auf eine Dicke von 4 mm einen Lichttransmissionsgrad $\tau_{vis}$ von 0,5 - 3,5 %, vorzugsweise 0,8 - 3,2 %, besonders bevorzugt 1,0 - 3,0 %, insbesondere 1,2 - 2,8 % aufweist und
wobei die Glaskeramik die Eigenschaft aufweist, dass Licht der Normlichtart D65 nach Durchtritt durch die Glaskeramik bezogen auf eine Dicke von 4 mm einen Farbort im Weißbereich A1 aufweist, der im Chromatizitätsdiagramm CIExyY-2° durch folgende Koordinaten bestimmt ist:

| A1 | |
|---|---|
| 0,3 | 0,27 |
| 0,28 | 0,315 |
| 0,35 | 0,38 |
| 0,342 | 0,31 |
| 0,3 | 0,27 |

2. Erzeugnis nach Anspruch 1, **dadurch gekennzeichnet, dass** die Glaskeramik $MoO_3$ in Mengen von 0,015 Gew.-% bis 0,100 Gew.-%, vorzugsweise 0,020 - 0,080 %, besonders bevorzugt 0,030 - 0,070 % enthält.

3. Erzeugnis nach Anspruch 1, **dadurch gekennzeichnet, dass** die Temperatur T($pO_2$= 1bar) der Glaskeramik im Bereich 1550-1700 °C, vorzugsweise 1560-1690, besonders bevorzugt im Bereich 1570-1680 °C liegt.

4. Erzeugnis nach Anspruch 1 oder 2, **dadurch gekennzeichnet, dass** die Glaskeramik $TiO_2$ in Mengen von 2,5 - <4,0 Gew.-%, vorzugsweise 2,8 - 3,9 Gew.-%, besonders bevorzugt 3,0 - 3,8 Gew.-% enthält.

5. Erzeugnis nach einem der vorhergehenden Ansprüche, **dadurch gekennzeichnet, dass** die Glaskeramik $ZrO_2$ in Mengen von 0,1 - 2,5 %, vorzugsweise 0,3-2,0 %, besonders bevorzugt 0,5-1,5% enthält.

6. Erzeugnis nach einem der vorhergehenden Ansprüche, **dadurch gekennzeichnet, dass** die Glaskeramik $TiO_2$ und

$ZrO_2$ im Verhältnis $ZrO_2$/ $TiO_2$ im Bereich von 0,1 - 0,67, bevorzugt 0,15 - 0,4 und besonders bevorzugt 0,2 - 0,33 enthält.

7. Erzeugnis nach einem der vorhergehenden Ansprüche, **dadurch gekennzeichnet, dass** die Glaskeramik $V_2O_5$ in Mengen von 0,0001 - 0,010 Gew.-%, bevorzugt 0,0005 - 0,0080 Gew.-%, besonders bevorzugt 0,0010 - 0,0050 Gew.-% enthält und/oder $Cr_2O_3$ in Mengen von 0 - 0,0100 Gew.-%, vorzugsweise 0,0005 - 0,0090, besonders bevorzugt 0,0010 - 0,0060 ppm und/oder $Fe_2O_3$ in Mengen von 0,05 - 0,30 Gew.-%, bevorzugt 0,06 - 0,20 Gew.-%, besonders bevorzugt 0,07 - 0,15 Gew.-% enthält.

8. Erzeugnis nach einem der vorhergehenden Ansprüche, **dadurch gekennzeichnet, dass** die Glaskeramik eine Dicke zwischen 1 bis 15 mm, vorzugsweise 2 bis 10 mm, besonders bevorzugt 3 bis 6 mm aufweist.

9. Erzeugnis nach einem der vorhergehenden Ansprüche, **dadurch gekennzeichnet, dass** die Glaskeramik $MoO_3$, $V_2O_5$ und $Cr_2O_3$ im Verhältnis ($V_2O_5$ + $Cr_2O_3$)/$MoO_3$ im Bereich von wenigstens 0,005 bis 0,5, bevorzugt von wenigstens 0,01 bis 0,2, besonders bevorzugt von wenigstens 0,03 bis 0,15 enthält.

10. Erzeugnis nach einem der vorhergehenden Ansprüche, **dadurch gekennzeichnet, dass** die Glaskeramik $MoO_3$ und $TiO_2$ im Verhältnis $MoO_3$/$TiO_2$ zwischen 0,002 und 0,050, zwischen 0,004 und 0,040, besonders bevorzugt zwischen 0,008 und 0,030 enthält.

11. Erzeugnis nach einem der vorhergehenden Ansprüche, **dadurch gekennzeichnet, dass** die Zusammensetzung der Glaskeramik die folgende Bedingung erfüllt: $Li_2O + SnO_2 < 5,8$, bevorzugt <5,0 besonders bevorzugt <4,5.

12. Erzeugnis nach einem der vorhergehenden Ansprüche, **dadurch gekennzeichnet, dass** die Glaskeramik die Eigenschaft aufweist, dass Licht der Normlichtart D65 nach Durchtritt durch die Glaskeramik bezogen auf eine Dicke von 4 mm einen Farbort im Weißbereich A2 aufweist, der im Chromatizitätsdiagramm CIExyY-2° durch folgende Koordinaten bestimmt ist:

| A2 | |
|---|---|
| x | y |
| 0,290 | 0,315 |
| 0,345 | 0,370 |
| 0,341 | 0,320 |
| 0,303 | 0,283 |
| 0,290 | 0,315 |

13. Erzeugnis nach einem der vorhergehenden Ansprüche, **dadurch gekennzeichnet, dass** die Glaskeramik in einem kontinuierlichen Schmelzaggregat hergestellt wurde.

14. Verwendung eines Erzeugnisses nach einem der vorhergehenden Ansprüche in einem Kochgerät, Backofen, Küchenmöbel, Spritzschutzplatte für Küchen, Kamin für Innenräume, insbesondere als Innen- oder Außenverkleidung oder als Sichtfenster, Kamin für den Außenbereich, insbesondere als Innen- oder Außenverkleidung oder als Sichtfenster, Grill, Kühlschrank, Mikrowellengerät, Abdeckung oder Verblendung von Dunstabzugshauben, Mobiltelefon, Tablet, Automobil, Laborgerät, Labormöbel, Brandschutzverglasung, Sichtfenster für Hochtemperaturprozesskammern, in einer IR-Strahlerabdeckung, Sichtblende, Abdeckung einer Benutzerschnittstelle in einem Bedienfeld vorzugsweise für die Steuerung wenigstens eines Haushaltsgeräts oder Abdeckung für eine Induktionsladestation.

Figur 1

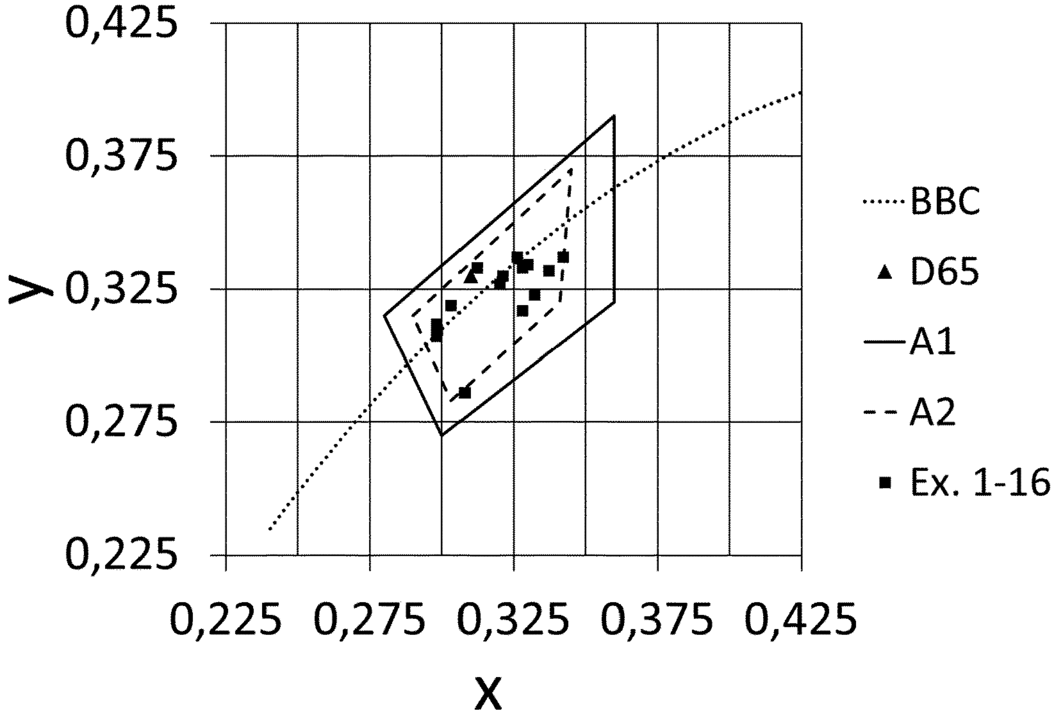


Figur 2

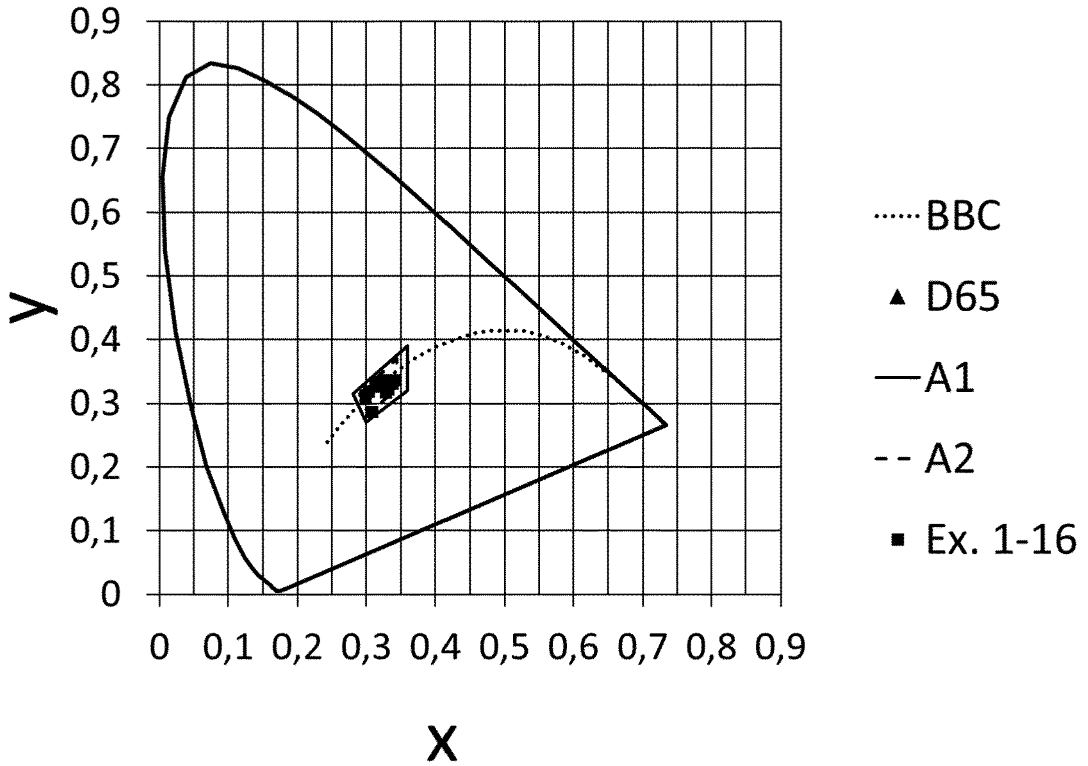

Figur 3

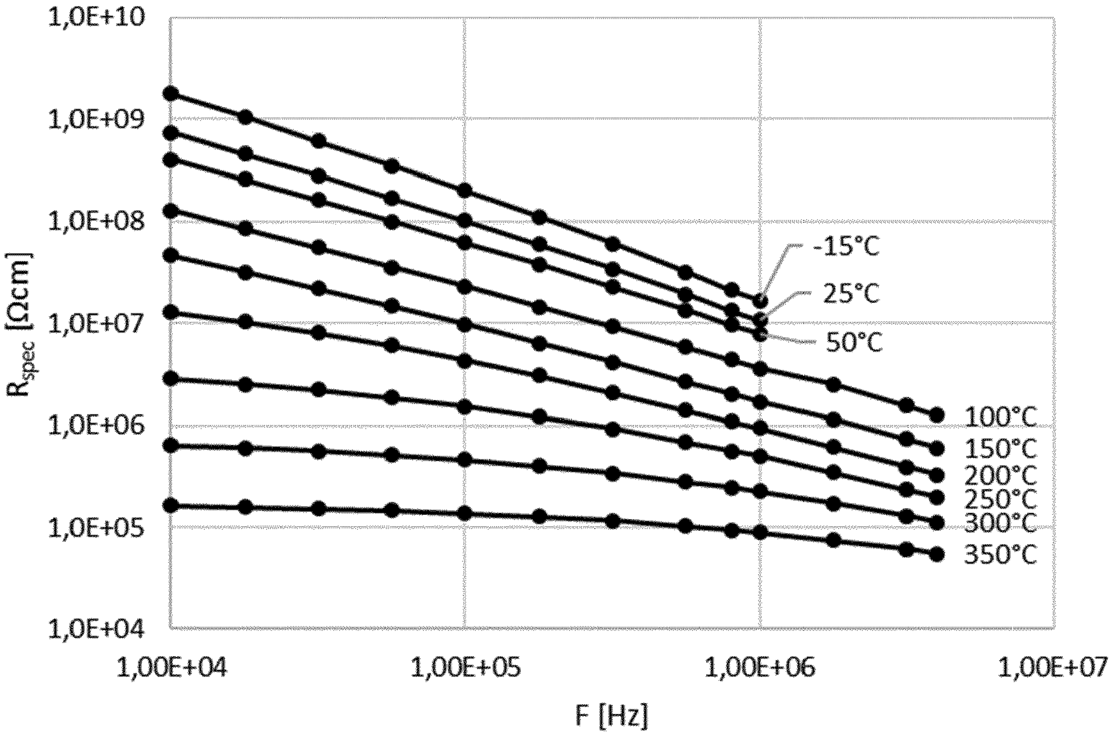


Figur 4

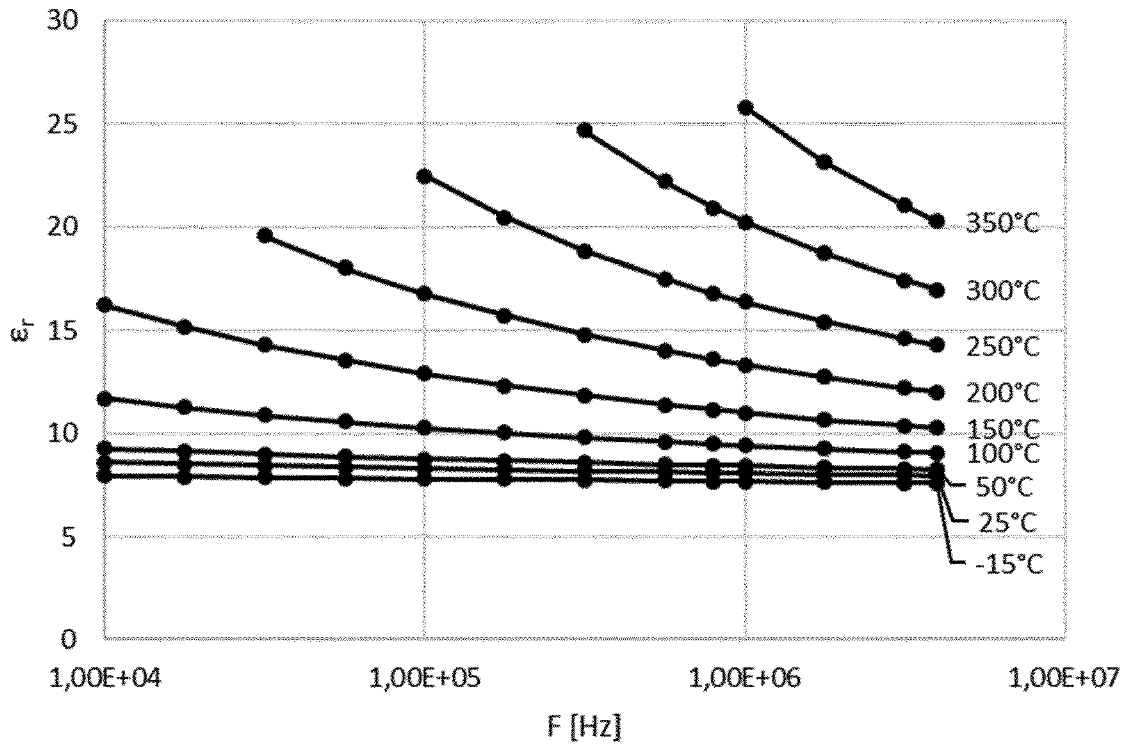

Figur 5

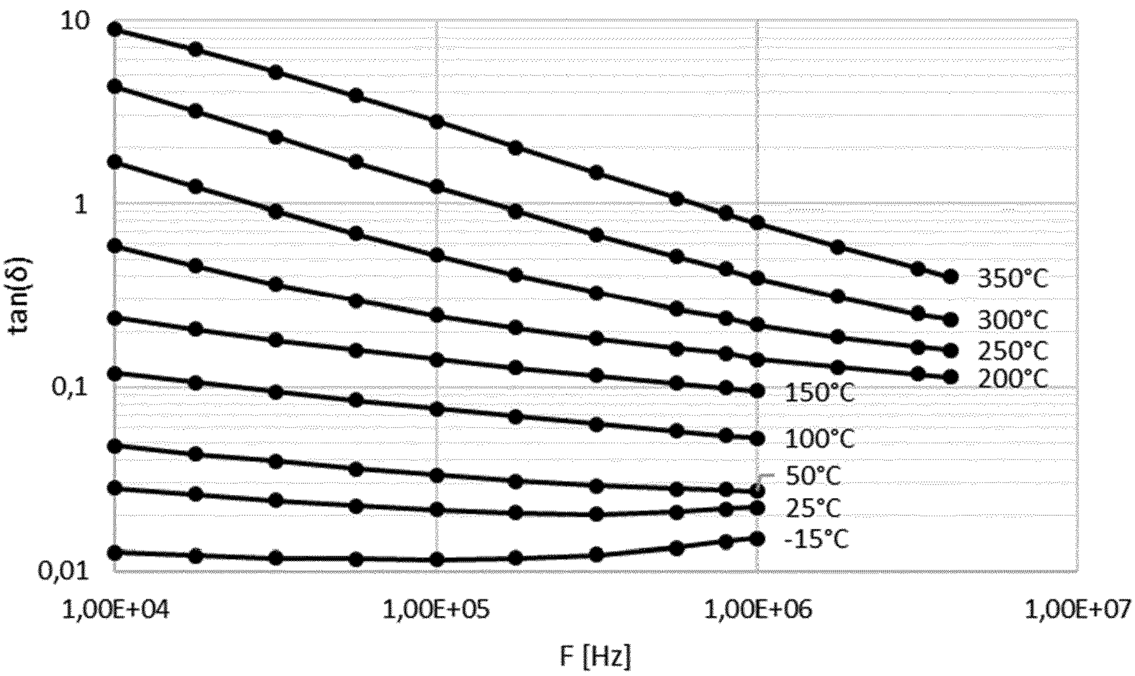


Figur 6

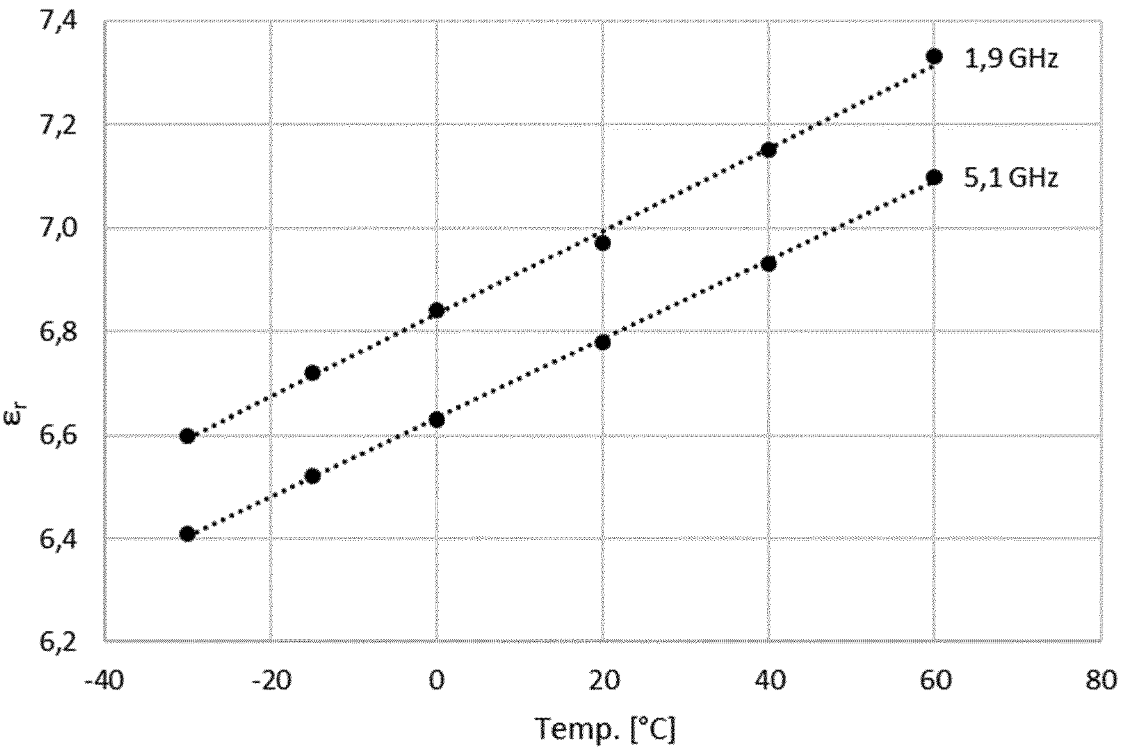

Figur 7

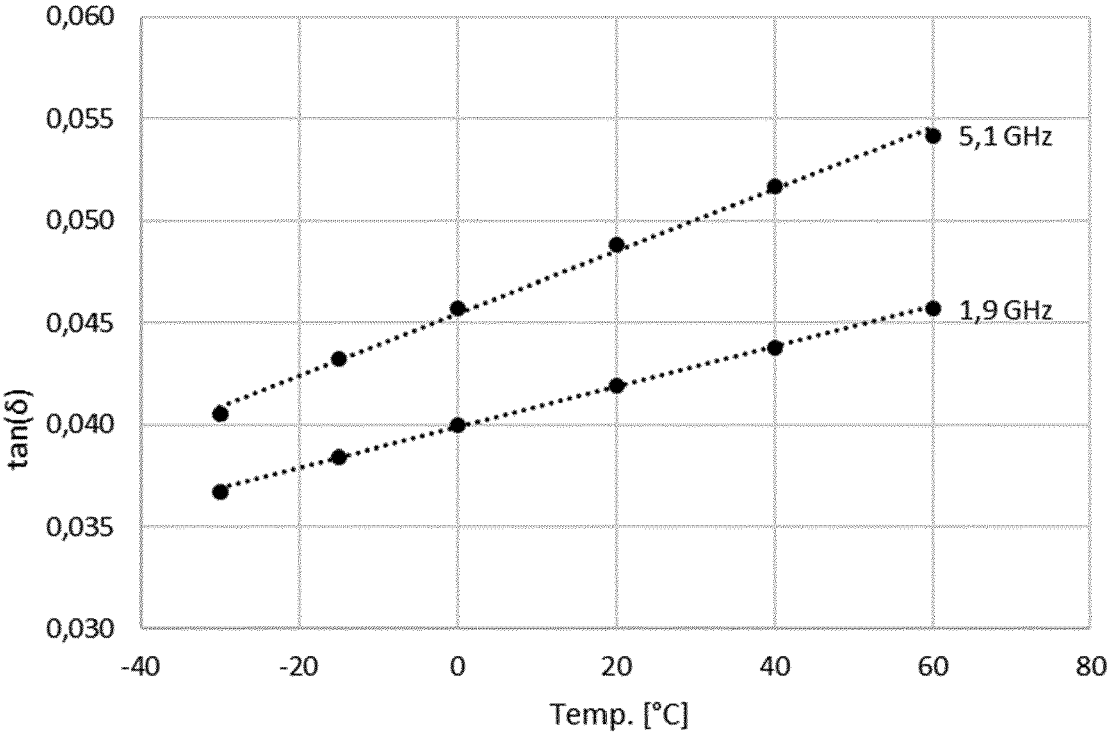


Figur 8

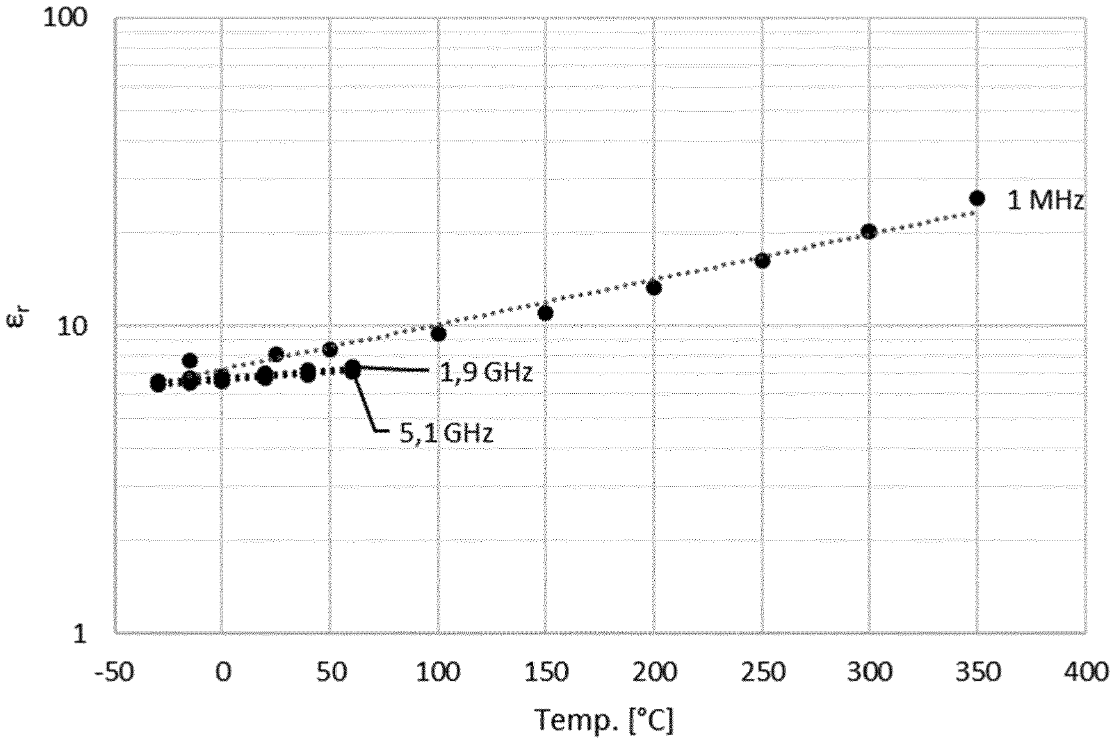

Figur 9

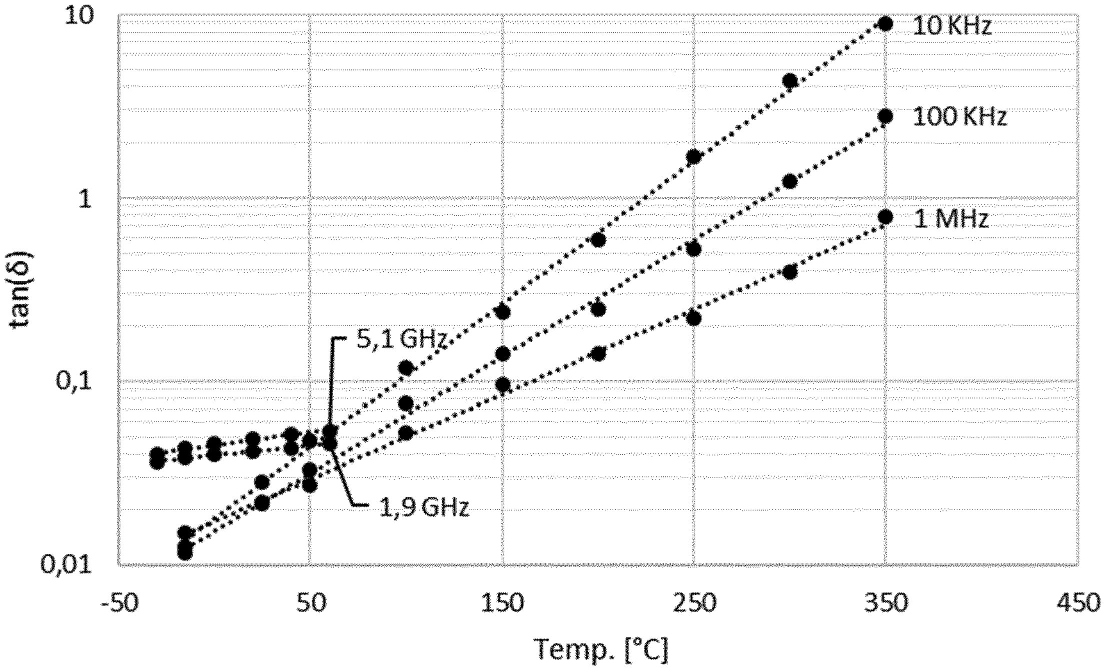
10
1
0,1
0,01
tan(δ)
-50
50
150
250
350
450
Temp. [°C]
10 KHz
100 KHz
1 MHz
5,1 GHz
1,9 GHz

Figur 10 a

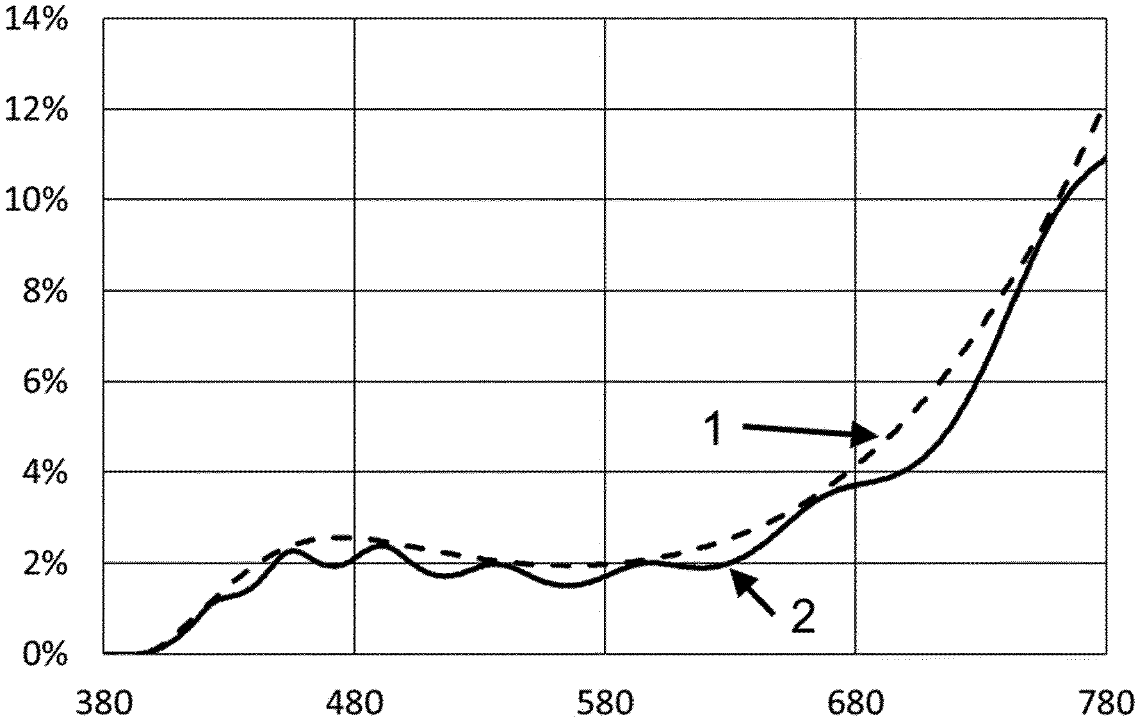


Figur 10 b

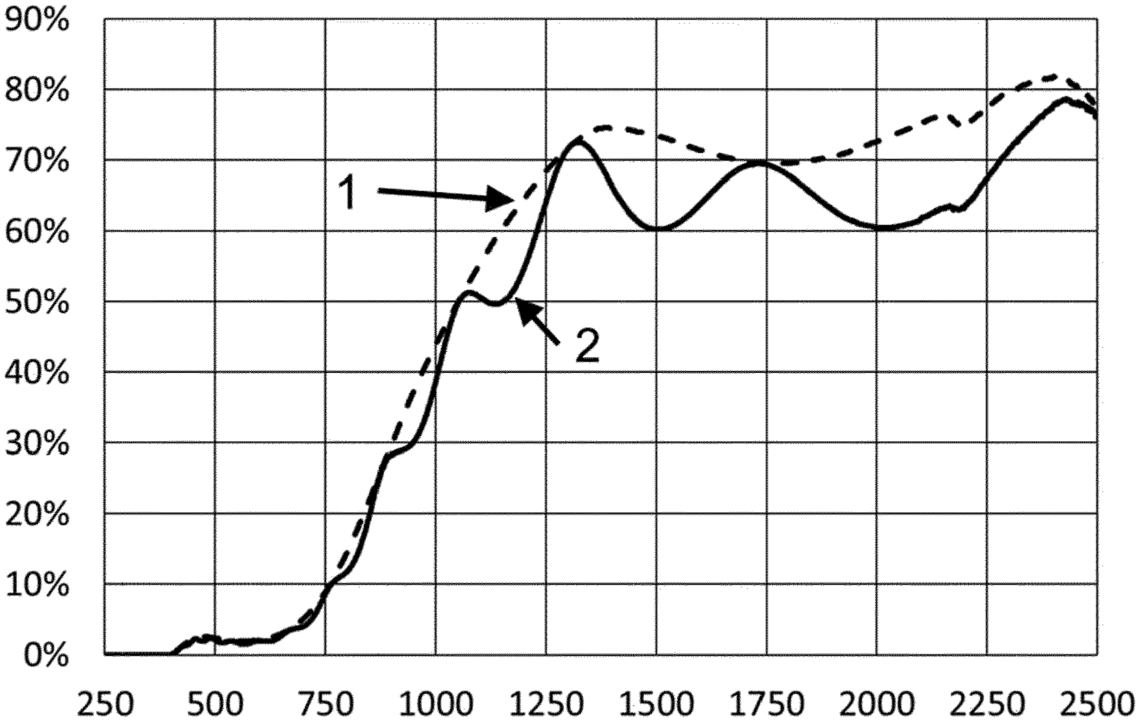

Europäisches Patentamt
European Patent Office
Office européen des brevets

# EUROPÄISCHER RECHERCHENBERICHT

Nummer der Anmeldung
EP 21 40 1028

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 730 463 A1 (SCHOTT AG [DE]) 28. Oktober 2020 (2020-10-28) * Beispiel B2 * ----- | 1-14 | INV. C03C3/097 C03C4/02 C03C10/00 |
| X | DE 10 2018 110897 A1 (SCHOTT AG [DE]) 21. Juni 2018 (2018-06-21) * Beispiel 3 * ----- | 1-14 | |
| X | DE 20 2018 102534 U1 (SCHOTT AG [DE]) 15. Mai 2018 (2018-05-15) * Beispiel 5 * ----- | 1-14 | |
| | | | RECHERCHIERTE SACHGEBIETE (IPC) |
| | | | C03C |

2

Der vorliegende Recherchenbericht wurde für alle Patentansprüche erstellt

| Recherchenort | Abschlußdatum der Recherche | Prüfer |
|---|---|---|
| München | 16. Dezember 2021 | Lecerf, Nicolas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR. EP 21 40 1028

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-12-2021

| Im Recherchenbericht angeführtes Patentdokument | Datum der Veröffentlichung | Mitglied(er) der Patentfamilie | Datum der Veröffentlichung |
|---|---|---|---|
| EP 3730463 A1 | 28-10-2020 | KEINE | |
| DE 102018110897 A1 | 21-06-2018 | CN 109956671 A | 02-07-2019 |
| | | DE 102018110897 A1 | 21-06-2018 |
| | | DE 202018006564 U1 | 19-02-2021 |
| | | DE 202018006566 U1 | 19-02-2021 |
| | | DE 202018102533 U1 | 12-06-2018 |
| | | EP 3502071 A1 | 26-06-2019 |
| | | ES 2790354 T3 | 27-10-2020 |
| | | JP 2019151544 A | 12-09-2019 |
| | | KR 20190076905 A | 02-07-2019 |
| | | US 2019194061 A1 | 27-06-2019 |
| DE 202018102534 U1 | 15-05-2018 | CN 109956668 A | 02-07-2019 |
| | | CN 109956670 A | 02-07-2019 |
| | | DE 102018110908 A1 | 21-06-2018 |
| | | DE 102018111330 A1 | 27-06-2019 |
| | | DE 202018102534 U1 | 15-05-2018 |
| | | EP 3728152 A1 | 28-10-2020 |
| | | JP 2019112298 A | 11-07-2019 |
| | | JP 2019112299 A | 11-07-2019 |
| | | KR 20190076887 A | 02-07-2019 |
| | | KR 20190076903 A | 02-07-2019 |
| | | US 2019194054 A1 | 27-06-2019 |
| | | US 2019194062 A1 | 27-06-2019 |
| | | WO 2019121742 A1 | 27-06-2019 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102008050263 A1
- DE 202018102537 U1
- EP 2226303 A2
- EP 1074520 A1
- WO 2012019833 A1
- WO 2014135490 A1


### In der Beschreibung aufgeführte Nicht-Patentliteratur


- **FREY, T. ; SCHAEFFER, H.A. ; BAUCKE, F.G.** Entwicklung einer Sonde zur Messung des Sauerstoffpartialdrucks in Glasschmelzwannen. *Glastechnische Berichte,* 1980, vol. 53 (5), 116-123
- **PROF. DR. H. A. SCHAEFFER.** *Allgemeine Technologie des Glases, Grundlagen des Schmelzens und der Formgebung,* September 1985